Europäisches Patentamt

European Patent Office

Office européen des brevets

(11) Publication number: **0 667 469 A1**

## EUROPEAN PATENT APPLICATION

(21) Application number: **94400323.5**

(51) Int. Cl.6: **F16H 31/00, B25B 13/46**

(22) Date of filing: **14.02.94**

(43) Date of publication of application:
**16.08.95 Bulletin 95/33**

(84) Designated Contracting States:
**AT BE CH DE DK ES FR GB GR IE IT LI LU MC NL PT SE**

(71) Applicant: **Fado, Akram**
**Al Wahda St.,**
**P.O. Box 3875**
**Sharjah (AE)**

(72) Inventor: **Fado, Akram**
**Al Wahda St.,**
**P.O. Box 3875**
**Sharjah (AE)**

(74) Representative: **Wagret, Frédéric Cabinet Wagret**
**23, rue de Saint-Pétersbourg**
**F-75008 Paris (FR)**

(54) **Ratchet mechanism exploiting both strokes of the ratchet motion.**

(57) This invention is connected with the idea of finding methods that can be used for the exploitation of the two half-periods of a motive force that is moving in a rotatory sine motion or in a straight sine motion in order to move a body in a one-direction rotatory motion [other than the well-known method, (the method of the wheel and the decentralized straight piece)] in case of the straight sine motion. These are eight essential methods, four of which are for the rotatory sine motion and four are for the straight sine motion.

These methods can be applied in any mechanical case that depends on the transmission of motion from a rotatory sine motion (or straight sine motion) into a one-direction rotatory motion.

That is useful at least in the following fields:

1- Exploiting the time which is often wasted, and which often passes without any production, during the half period of the sine motion.

2- Sparing (or exploiting) the power exerted during that wasted time.

An applied example of this invention is the double ratchet-spanner, or double ratchet screw driver.

Fig (2)

EP 0 667 469 A1

The Subject of the Invention

* This invention is [a set of technical methods that are helpful to exploit the two halves of the period of a motive force that is in rotatory sine motion or straight sine motion, so that it causes a body to become in one - direction rotatory motion.]
This set includes:
- Four methods to exploit the two halves of the period of the motive force that moves in a rotatory sine motion.
- And four methods to exploit the two halves of the period of the motive force that moves in a straight sine motion,[which are different from the ordinary and well-known method,(which is the method of the wheel and the non-central straight piece,)].
- Together with an applied and practical example of this invention (i.e.these methods).

Summery of the invention subject and its applied example

* These methods are some mechanisms in the field of motion transmission, they can be applied in several mechanical and industrial matters, where they help to exploit half the period of motive force which is usually wasted, and help to expliot the power exerted in that time.
These methods include:
- Four methods to exploit the two halves of the period of the motive force that moves in a rotatory sine motion, and I shall call them briefly the methods used for the exploitation of the rotatory sine motion.
- And four methods to exploit the two halves of the period of the motive force that moves in a straight sine motion, and Ishall call them briefly the methods used for the exploitation of the straight sine motion.
The applied example:
A - As an application of the methods used for the exploitation of the rotatory sine motion,: it is a new kind of the ratchet - spanner, and I shall call it a double ratchet-spanner, and it works in the same way of the ordinary ratchet-spanner, but:
- If we put it in the binding position, it will bind the nut or screw if we move it clockwise, and even if we move it counter - clockwise, it will bind the (nut or screw... etc.) too.
- And if we put it in the unbinding position, it will unbind the nut or screw if we move it clockwise, and even if we move it counter-clockwise, it will unbind the (nut or screw... etc) too.
- Also we can use it as an ordinary ratchet-spanner, as explained in the important notes concerning the technical description of that spanner.
B - As an application of the methods used for the exploitation of the straight sine motion,: it is a new kind of ratchet-spanner, and we can call it a straight -motion double ratchet-spanner, and it does the following:
- If we put it in the binding position, it will bind the nut or screw if we move it straight in a certain direction, and even if we move it straight in the opposite direction, it will bind the (nut or screw... etc) too.
- And If we put it in the unbinding position, it will unbind the nut or screw if we move it straight in a certain direction, and even if we move it straight in the opposite direction, it will unbind the (nut or screw... etc).
- Also we can use it as a straight- motion ordinary ratchet-spanner, that is to say, it will bind the screw if we move it straight in one certain direction, and it will not affect the screw if we move it straight in the opposite direction. The same is true concerning the unbinding of the screw.
- Also we can use it simultaneously as a straight-motion ordinary ratchet-spanner and a straight-motion double ratchet-spanner, as explained in the important notes concerning the technical description of that spanner.

- Now here is an index of the technical specifications and an explanatory index of the figures

## The index of the technical specification          page No

### - The technical specifications of the invention

### A - The methods used for the exploitation of the rotatory sine motion

1-1: Technical description of the first method used for the exploitation of the rotatory sine motion................. 13

1-2: Important notes concerning this method.................. 15

2-1: Technical description of the second method used for the exploitation of the rotatory sine motion................. 24

2-2: Important notes concerning this method.................. 24

3-1: Technical desription of the third method used for the exploitation of the rotatory sine motion................. 26

3-2: Important notes concerning this method.................. 27

4-1: Technical description of the fourth method used for the exploitation of the rotatory sine motion................. 28

4-2: Important notes concerning this method.................. 31

### B - The methods used for the exploitation of the straight sine motion

5-1: Technical description of the first method used for the exploitation of the straight sine motion................. 33

5-2: Important notes concerning this method.................. 33

6-1: Technical description of the second method used for the exploitation of the straight sine motion................. 34

6-2: Important notes concerning this method.................. 34

7-1: Technical description of the third method used for the exploitation of the straight sine motion................. 36

7-2: Important notes concerning this method.................. 36

8-1: Technical description of the fourth method used for the exploitation of the straight sine motion................. 37

8-2: Important notes concerning this mothod.................. 37

**Technical specifications of the applied example**

<u>A - As a practical application of the methods used
for the exploitation of the rotatory sine motion</u>

9-1: Description of the spanner accoding to the first method
used for the exploitation of the rotatory sine motion.. 38

9-2: Important notes concerning the spanner according to this
method........................................................... 54

10 : The spanner according to the paragraph (A) of note(2)
in the important notes concerning the first method used
for the exploitation of the rotatory sine motion.

*I- First case [according to figure (7)]

10-1: Description of the spanner according to the first
probability of the first case of paragraph (A)........ 57

10-2: Important notes concerning the spanner according to
this probability.............................................. 57

10-3: Description of the spanner according to the second
probability of the first case of paragraph (A)........ 59

10-4: Important notes concerning the spanner according to
this probability.............................................. 59

10-5: Description of the spanner according to the third
probability of the first case of paragraph (A)........ 60

10-6: Important notes concerning the spanner according to
this probability.............................................. 62

*II- Second case [according to figure (8)]

10-7: Description of the spanner according to the two
probabilities of the second case of the paragraph (A). 63

10-8: Important notes concerning the spanner according to
this case..................................................... 63

11- : Spanner according to paragraph (B) of the note (2) in
the important notes concerning the first method used
for the exploitation of the rotatory sine motion.

11-1: Description of the spanner according to the first
probability of paragraph (B)............................... 64

11-2: Important notes concerning the spanner according to
this probability.............................................. 64

EP 0 667 469 A1

11-3: Description of the spanner according to the second probability of paragraph(B)............................ 65

11-4: Important notes concerning the spanner according to this probability.................................... 65

12-1: Description of the spanner according to the second method used for the exploitation of the rotatory sine motion......................................................... 66

12-2: Important notes Concerning the spanner according to this method........................................ 66

B - As a practical application of the methods used for the exploitation of the straight sine motion

13-1: Description of the spanner according to the third method used for the exploitation of the straight sine motion......................................................... 67

13-2: Important notes concerning the spanner according to this method........................................ 67

14-1: Description of the spanner according to the fourth method used for the exploitation of the straight sine motion......................................................... 69

14-2: Important notes concerning the spanner according to this method........................................ 71

15-1: Description of the spanner according to the second method used for the exploitation of the straight sine motion......................................................... 72

15-2: Important notes concerning the spanner according to this method........................................ 72

16-1: Description of the spanner according to the first method used for the exploitation of the straight sine motion......................................................... 74

16-2: Important notes concerning the spanner according to this method........................................ 74

Explanatory index of the figures

"Please note the important notes about the figures at the end of this index".

A - What the 42 Figures illustrate

1-Figures that are in accordance with the technical specification of the invention (methods)

F.1 - illustrates cylinders ⟨A1⟩,⟨B1⟩,⟨C1⟩ and the positions of these cylinders (in the first method used for the exploitation of the rotatory sine motion).

F.2 - illustrates the mechanism of the first method used for the exploitation of the rotatory sine motion (in general).

R - F.2 - illustrates the fixation of F.2 as an example.

F.3 - illustrates the paragraph (A) in the note (1) in the important notes concerning the first method used for the exploitation of the rotatory sine motion.

| | | |
|---|---|---|
| F.4 - | | illustrates the paragraph (B) in the note (1) in the important notes concerning the first method used for the exploitation of the rotatory sine motion. |
| F.5. and F.6 - | | illustrate the paragraph (C) in the note (1) in the important notes concerning the first method used for the exploitation of the rotatory sine motion. |
| F.7. and F.8 - | | illustrate the paragraph (A) in the note (2) in the important notes concerning the first method used for the exploitation of the rotatory sine motion. |
| R - F.7 - | | illustrates the fixation of F.7 as an example. |
| F.9. and F.10 - | | illustrate the paragraph (B) in the note (2) in the important notes concerning the first method used for the exploitation of the rotatory sine motion. |
| F.11 - | | illustrates the mechanism of the second method used for the exploitation of the rotatory sine motion. |
| F.12 - | | illustrates the mechanism of the third method used for the exploitation of the rotatory sine motion. |
| F.13 - | | illustrates the note (2) in the important notes concerning the third method used for the exploitation of the rotatory sine motion. |
| F.14 - | | illustrates the fourth method used for the exploitation of the rotatory sine motion. |
| F.15 - | | illustrates the note (2) in the important notes concerning the fourth method used for the exploitation of the rotatory sine motion. |

2 - Figures that are in accordance with the technical specifications of the applied example

| | | |
|---|---|---|
| F.16 - and F.17- | | illustrate the cylinder ⟨A⟩ mentioned in the description of the spanner (according to the first method used for the exploitation of the rotatory sine motion). |
| F.18 - and F.19- | | illustrate the cylinder ⟨C⟩ mentioned in the description of the spanner (according to the first method used for the exploitation of the rotatory sine motion). |
| F.20 - and F.21 - | | illustrate the mechanism of the spanner's work (according to the first method used for the exploitation of the rotatory sine motion) (in general). |
| F.22 - | | illustrates the cover mentioned in the method used for tying the cover on the first condition. |
| F.23 - | | illustrates a section in the cylinder ⟨D⟩ mentioned in the method used for tying the cover on the first condition. |
| F.24 - | | illustrates the cover mentioned in the method used for tying the cover on the second condition. |
| F.25 - | | illustrates a section in the cylinder ⟨D⟩ mentioned in the method used for tying the cover on the second condition. |
| F.26 - | | illustrates the probability that the place of the prism can be elongated in the cylinder ⟨A⟩. on this place there is a place suitable for the (elastic ring). |
| F.27 - | | illustrates the cover mentioned in the first method used for the fixation of the cylinders ⟨B⟩. |
| F.28 - | | illustrates a section in the cylinder ⟨D⟩ mentioned in the second method used for the fixation of the cylinders ⟨B⟩ (for the probability that the area ⟨d3⟩ is ready for tying the cover on the second condition). |
| F.29 - | | illustrates the second method used for the fixation of the cylinders ⟨B⟩. |
| F.30 - | | illustrates the third method used for the fixation of the cylinders ⟨B⟩. |
| F.31 - | | illustrates the note (2) in the third method used for the fixation of the cylinders ⟨B⟩. |
| F.32 - | | illustrates a section in the cylinder ⟨D⟩ mentioned in the fourth method used for the fixation of the cylinders ⟨B⟩. |
| F.33 - | | illustrates the mechanism of the fourth method used for the fixation of the cylinders ⟨B⟩. |
| F.34 - | | illustrates the mechanism of the fifth method used for the fixation of the cylinders ⟨B⟩. |
| F.35 - | | illustrates the note (1) in the fifth method used for the fixation of the cylinders ⟨B⟩. |
| F.36 - | | illustrates the probability that there may be brake nails on the external surface of the cylinder ⟨A⟩. |
| F.37 - | | illustrates a vertical projection of the base of the cylinder ⟨B⟩ mentioned in the third probability in the first case in the description of the spanner (according to the paragraph ⟨A⟩ in the note (2) in the important notes concerning the first method used for the exploitation of the rotatory sine motion). |

F.38 -        illustrates the mechanism of the spanner and the way in which it works accodring to the third probability in the first case in the description of the spanner (according to the paragraph ⟨A⟩ in the note (2) in the important notes concerning the first method used for the exploitation of the rotatory sine motion).

F.39 -        illustrates cylinder ⟨D⟩ used in the second probability in the description of the spanner (according to the paragraph (B) in the note (2) in the important notes concerning the first method used for the exploitation of the rotatory sine motion).

F.40 -        illustrates the spanner (according to the third method used for the exploitation of the straight sine motion).

F.41 -        illustrates the first method used for the fixation of the cylinders ⟨G⟩.

F.42 -        illustrates the spanner (according to the fourth method used for the exploitation of the straight sine motion).

B-What the 59 numbers and the three Symboles in figures refer to

1-        means the cylinder ⟨A1⟩

2-        means the cylinder ⟨B1⟩

3-        means the cylinder ⟨C1⟩

4-        means the cylinder ⟨BC1⟩

5-        means the cylinder ⟨A⟩

6-        means the cylinder ⟨B⟩

7-        means the cylinder ⟨C⟩

8-        means the cylinder ⟨D⟩

9-        means the cylinder ⟨E⟩

10-        means the cylinder ⟨F⟩

11-        means the cover of the spanner (that covers the internal parts of the spanner).

12-        means protrusions on the lateral Surface of the cover.

13-        means the Location where the rotation axis of the cylinder will be placed.

14-        means brake teeth.

15-        means gearing teeth.

16-        means brake nail (or brake nails on a brake nail holder).

17-        means the spring of the brake nail.

18-        means the motive force.

19-        means the rotation axis of the motive force.

20-        means the opening in which the connection of the thimble will enter.

21-        means the connection of the thimble.

22-        means arrows that show direction of motion.

23-        means the handle of the spanner.

24-        means the place of the elastic ring.

25-        means projecting orbital area. (Notes: *orbital area means a part of the surface of the cylinder which is bounded by two lines that are drawn by the rotary motion of two points along the surface of the cylinder.

* An orbital projecting area means: an orbital area that is projecting above the level of the surface of the cylinder.

* An orbital groove means: a groove along the orbital area i.e. along the surface of the cylinder).

26-        means orbital area ⟨d1⟩

27-        means orbital area ⟨d2⟩

28-        means orbital area ⟨d3⟩

29-        means orbital area ⟨d4⟩

30-        means orbital area ⟨d5⟩

31-        means the ring mentioned concerning this figure.

32-        means the shafts that fix the ring mentioned concerning this figure.

33-        means the solid piece concerning this figure.

| 34- | means orbital groove (see the note mentioned above after 25). |
| 35- | means cylinder ⟨C1⟩ in the technical description of (F.38) |
| 36- | means cylinder ⟨C2⟩ |
| 37- | means the point (y) |
| 38- | means the point (z) |
| 39- | means cylinders ⟨G⟩ |
| 40- | means nail holder ⟨K⟩ |
| 41- | means nail holder ⟨K1⟩ |
| 42- | means nail holder ⟨K2⟩ |
| 43- | means cylinder ⟨GK1⟩ |
| 44- | means cylinder ⟨GK2⟩ |
| 45- | means nail holder ⟨L⟩ |
| 46- | means nail holder ⟨L1⟩ |
| 47- | means nail holder ⟨L2⟩ |
| 48- | means cylinder ⟨GL1⟩ |
| 49- | means cylinder ⟨GL2⟩ |
| 50- | means solid wheel concerning this figure. |
| 51- | means solid peice that connects the nail holder. |
| 52- | means the sign(x) shown in the description of figure (41). |
| 53- | means groove that guides the motion of the cylinder ⟨G⟩. |
| 54- | means a fixation board. |
| 55- | means one of the sides of the box. |
| 56- | means the expanse of motion of the Cylinder out of the (box or the fixation board). |
| 57- | means the fixation axis of the Cylinder. |
| 58- | means a suitable connective way. |
| 59- | means a nails holder in general, (even if it holds brake teeth in the figure instead of nails, that is according to the note 16 of the important notes about the first technical description). |
| Symbol (F-?)- | means this part is illustrated in figure so and so, (Number of figure is in place of the question mark). |
| Symbol (R-)- | befor the (F. number) means that this figure is related to a main previous figure to illustrate some designated pointes, The number of that main figure is the number written after (R-F). |
| [Section (1) of] or [Section (2) of]- | means the first section or the second section of the figure. This Symbol is found in the case that one page was not enough for drawing that figure so it was written on two pages. |

Important Notes about figures

1- Figures are not to be considered standards for measurements at all. Because measurements can be relatively different from those in figures (measurements of some parts compared with other parts), on condition that these differences will not change the purposes of those parts. For example:

In figures (30),(31),(34), and (35), the cylinders ⟨F⟩ and ⟨B⟩ can have a mutual one axis[i.e.We can consider the dimensions of the solid piece (concerning those figures) to be zero] or rather we can consider it the axis that passes through the centers of the cylinder ⟨F⟩ and ⟨B⟩ ...etc.

In this case, however, the measurements of the other parts must be proportional to the same.

2- Figures are not to restrict the shape of any part to what is shown.Instead it may be in other shapes, on condition that that part will do its function needed, For example: In figure (20), we notice that the cover (11) has a toothed area with brake teeth that form an orbital projecting area along the internal surface of the cylinder. Now we understand that this area is not necessarily to be solely projecting. Instead it can be a groove...etc. In such a case, however, the shapes of the other parts must be propertional to the same.

3- Some figures may explain some points other than those shown in the explanatory index of figures.For example:

Figure (32) illustrates a section in the cylinder ⟨D⟩ used in the fifth method used for the fixation of the cylinder ⟨B⟩, (in addition to what is mentioned in the explanatory index of figures concerning that figure) .We can note this in the technical description.

4- I did not explain some certain things in the figures, though they must be available. I did not explain them, because the necessity of their availability is too clear.For example:

In figure (42), I have not drawn barries for the brake nails carried on the nail holders which are wanted to prevent those nails from sliding out of the holder, because it is self-evident that such barries are necessary.

-Now here is the technical specifications-

Technical Specifications of the Invention (Methods)

A-The methods used for the exploitation of the rotatory sine motion

1-1) The first method used for the exploitation of the rotatory sine motion

Required things for the application of this method:

1. Toothed wheel of type (1):
A hollow cylinder with gearing teeth on its external surface, and brake teeth on its internal surface, This toothed wheel of type (1) will be called cylinder ⟨A1⟩. Figure (1) illustrates this cylinder.

2. Toothed wheel of type (2):
A hollow or solid cylinder with gearing teeth on its external surface. These teeth can turn and gear together with the gearing teeth of the cylinder ⟨A1⟩ This toothed wheel of type (2) will be called the cylinder ⟨B1⟩ which is illustrated in figure (1).

3. Toothed wheel of type (3):
A hollow cylinder with brake teeth on its external surface. (but their inclination direction is in the opposite direction to the inclination direction of the brake teeth in the toothed wheel of type (1)).

And its internal surface has gearing teeth that can turn and gear with the gearing teeth of the toothed wheel of type (2).

And the internal radius of one of its two bases = [ the external radius of the base of the toothed wheel of type (1) + the diameter of the base of the cylinder ⟨B1⟩], on the condition that we must allow for the measurements of teeth so that the gearing in figure (1) will be done . This toothed wheel will be called the cylinder ⟨C1⟩

4-Brake nail of type (1):
Brake nail that fits the brake teeth of the cylinder ⟨A1⟩ in order to exchange the effects with them (the well-known effect between a brake nail and a breake toothed wheel) as in figure (2).

5. Brake nail of type (2):
A brake nail that fits the brake teeth of the cylinder ⟨C1⟩ as in figure (2).

The Mechanism of this Method

- Put the toothed wheel of type (1) and the toothed wheel of type (3), so that their vertical projections will be two circles that are having a one center and placed in one plane.

Put the toothed wheel of type (2) in the area between the external surface of the toothed wheel of type (1) and the internal surface of the toothed wheel of type (3), it is prefered that it will be apt to rotate only round its rotation axis that passes through it's center.

- so that the three toothed wheels can turn and gear with one another. The toothed wheel of type (2) plays the role of a transmission in the opposite direction between the toothed wheel of type (1) and the toothed wheel of type (3). Figure (1) illustrates this.

Now:

Let us suppose that the motive force is the straight piece (B-C), and that it moves in a rotatory sine motion, and that its lenght is at least equivalent to the external radius of the base of the cylinder ⟨C1⟩.

Let us also suppose that the body wanted to be moved (I'll call it the moved body), in a one - direction rotatory motion is the cylinder ⟨A1⟩.

Now we want to exploit the two helves of the period of the motion of the straight piece (B-C), so that it can move the toothed wheel of type (1). in a one-direction rotatory motion. In oder to do this, we shall arrange the path of the straight piece so that it will be paralel to the path of the toothed wheel of type (1), and consquently paralel to the path of the toothed wheel of type (3) (Imean the path with disregard of the direction of the motions)i.e.its rotation centre must be a point on the axis of both the toothed wheel of type (1) and the toothed wheel of type (3) (rotation centre is the point round which somthing rotates.).

Now we shall install a nail of type (1) on a suitable point of this straight piece in a suitable way that this nail and the brake teeth of the toothed wheel of type (1) can exchange the effects. Also we shall install a nail of type (2) on a second point of the stright piece so that this nail and the brake teeth of the toothed wheel of type (3) can exchange the effects.

Now we note the following:

When the straight piece (B-C) moves during its first half period, it will cover the distance (z-y) figure (2) .While covering that distance, it will move the toothed wheel of type (1) clockwise as a result of the effect of the nail of type (1) [In this case, the nail assigned to the toothed wheel of type (3) has no effect on that toothed wheel except for friction which is preferred to be trivial ( if there is any friction at all)].

When that piece moves during its other half period, it will cover the distance (y-z). While covering that distance, it will move the toothed wheel of type (3) counter - clockwise, and this toothed wheel will move the toothed wheel of type (1) clockwise, because of the toothed wheel of type (2) [In this case, the nail of type (1) has no effect on the toothed wheel except for friction, which is preferred to be trivial (if there is any friction at all)]. Figure (2) illustrates this mechanism.

So we find that:

We have exploited the two halves of the period of a motive force that is in rotatory sine motion. so that it causes a body to become in a one - direction rotatory motion.

This is the first method used for the exploitation of the rotatory sine motion (in general).Therefore it is quite necessary to set some important notes (which are 23).

1-2) Important notes about the first method used for the exploitation of the rotatory sine motion

1.The brake teeth and the gearing teeth are not restricted to be replaceing as in the same system mentioned in (that technical description), for example:

A - The brake teeth of the cylinder ⟨A1⟩ can be on the external surface of this cylinder, where that surface can be divided into two orbital areas, one of which has gearing teeth, and the other has brake teeth (These areas can also be orbital projecting area on one another if we want) Figure (3) illustrates this.

B - Also these brake teeth of the cylinder ⟨C1⟩ can be on the internal surface of this cylinder. Figure (4) illustrates this.

C - Also the brake teeth or gearing teeth or both may be on the bases of the cylinders.

Figures (5) and (6) illuustrate this (Pleases note that I have not drawn the brake teeth in these figures (5) and (6), because they can be on any surface or base of the cylinder).

In brief: the area with brake teeth or the area with gearing teeth or both can be on (the internal surface, external surface, the upper base, or the lower base of the cylinder) on the condition that they will do the function needed.

i.e. the positions, forms and measurements of all elements in the method must be adapted to the function needed of them to do the method. And to suit the function needed of the method when we want to apply it in some mechanical matter.

2.According to the note (1), I add that the three cylinders are not restricted to be in the same positions mentioned in this mechanism. For example:

A - The cylinders ⟨A1⟩ and ⟨C1⟩ can be above each other . However in this case, all positions, shapes and measurements of all elements in the method must be adapted to the function needed.

[According to the note (1), several forms can be made, Figures (7) and (8) illustrate some of these forms. (Pleas note that I have not explained the brake teeth in figure (8), because thay may be just as in figure (7) or according to the note (1))].

B - Also the two cylinders ⟨A1⟩ and ⟨C1⟩ may be beside each other.In this case, all positions, shapes and measurements of all elements in the method must be adapted to the function needed.

[According to the note (1), Several forms can be made to arrange this position and figures (9) and (10) illustrate some of these forms (Please note that the shapes of the nails and the position of the rotation axis of the straight piece are different, in order to explain the note (11) as we shall later)].

3 - Please note that:

A - The "elements in the method" means the cylinders, toothed wheels (or the toothed areas in the cylinders), elements of toothed wheels, elements of teeth, brake nails (or brake nails holders as we shall see later), elements of motion (in general), elements of force (in general), durability, productivity, elements of the sine motion and of its motive force (i.e. the shape of the motive force, its path, its rotation axis, its motion impluse and its phase difference etc).

B - The sine motion means : the sine motion, whether it is unform or not.

C - half period means : the time during which the motive force (or its alternative) is going in one direction.

4 - The basic purpose of gearing teeth in the three toothed wheels is transmission of motion among them.Therefore these gearing teeth can be replaced by anything that meets the function needed.For example : we can replace gearing teeth on the three cylinders by rubber in a suitable shape, propertion and pressure.That will meet the function needed.

5 - On the other hand (of the note (4)) we can replace brake teeth and brake nails by anything that meet the function needed.

6 - In this method,we note that each one of the toothed wheels turns round its rotation axis in one direction (mostly) .So we can consider that the body wanted to be moved is one, some, or all of these toothed wheels [of course if the body wanted to be moved was not the toothed wheel itself, we can fix the toothed wheel on the body wanted to be moved (or we transmit its motion to it properly) according to the function needed].

7 - The force which is in a rotatory sine motion can take not only the shape of a straight piece but it can take several shapes for example: it can take the shape of (the cylinder or a circle or an arc... etc), that depends on the way of connecting it to the nails holders, and on the function needed of the method when we want to apply it in some mechanical matter.

Measurements, shape, position, and connection with nails holders, of the motive force must be suitable for the function needed to do the method.

8 - Of course, the path of the motive force can be a circle or an arc in a circle.

9 - If we consider that the moved body is the cylinder ⟨A1⟩, we note that we can do without the property of the brake nail and the brake toothed wheel between the nail of type (2) and the cylinder ⟨C1⟩. This can be done by fixing the cylinder ⟨C1⟩ with the straight piece so that the cylinder ⟨C1⟩ turns with the straight piece in its rotation direction. In this case, the cylinder ⟨B1⟩ must be apt to turn round the rotation axis of the cylinder ⟨A1⟩ in the supposed rotation direction of the cylinder ⟨A1⟩ (in addition to its aptitude to turn round its rotation axis).

Also if we consider the body wanted to be moved is the cylinder ⟨C1⟩, we note that we can do without the property of the brake nail and the brake toothed wheel between the nail of type (1) and the cylinder ⟨A1⟩ (no figure).

10 - Brak nails of type (1) and type (2), can be mor than one nail, holded on a suitable holder.

So the nails holder wich effects on ⟨A1⟩ is the nails holder of type (1).

And the nails holder wich effects on ⟨C1⟩ is the nails holder of type (2).

Of course: position of nails on the holder, position of holders to ⟨A1⟩ and ⟨C1⟩, shape of holders, and the connection way of holders with the motive force. All must be suitable for the function needed of them to do the method.

For Example:

The nails holder can take the shape of cylinder.

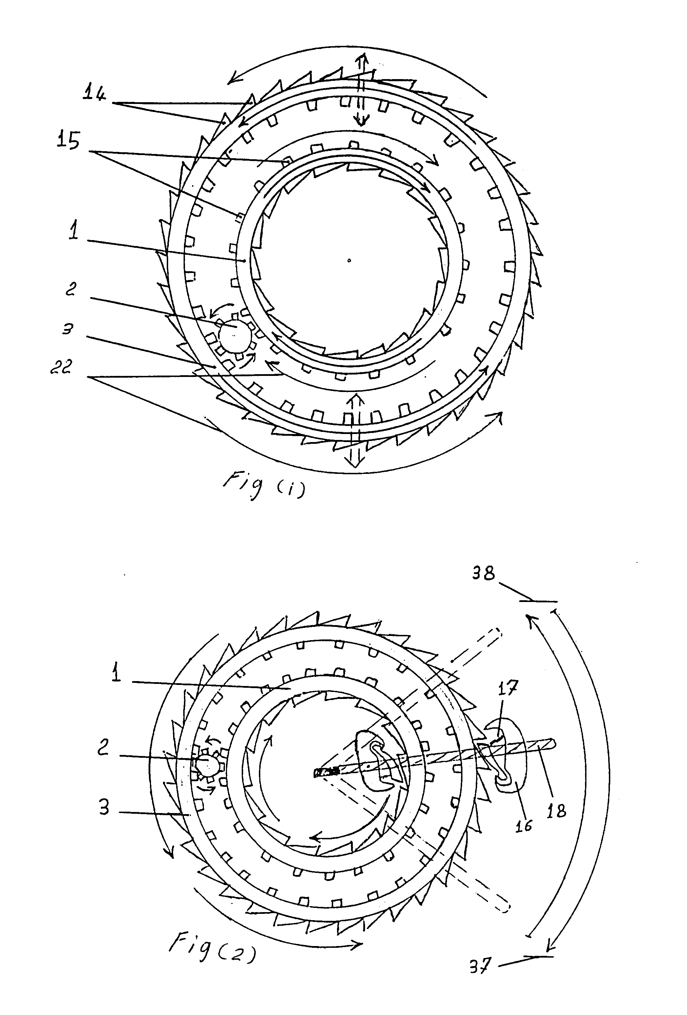

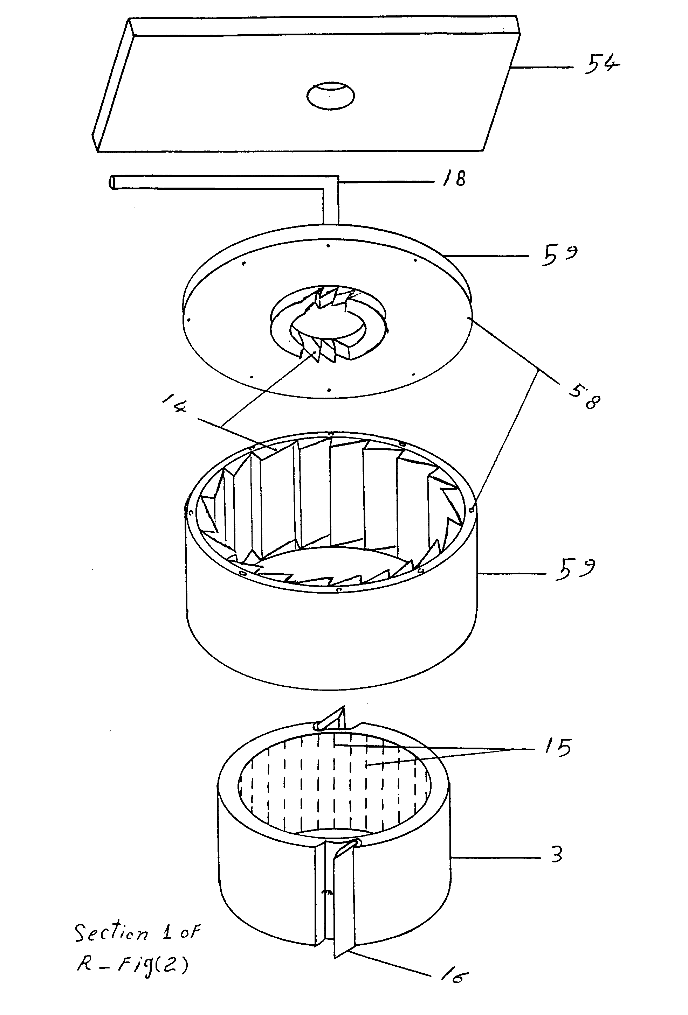

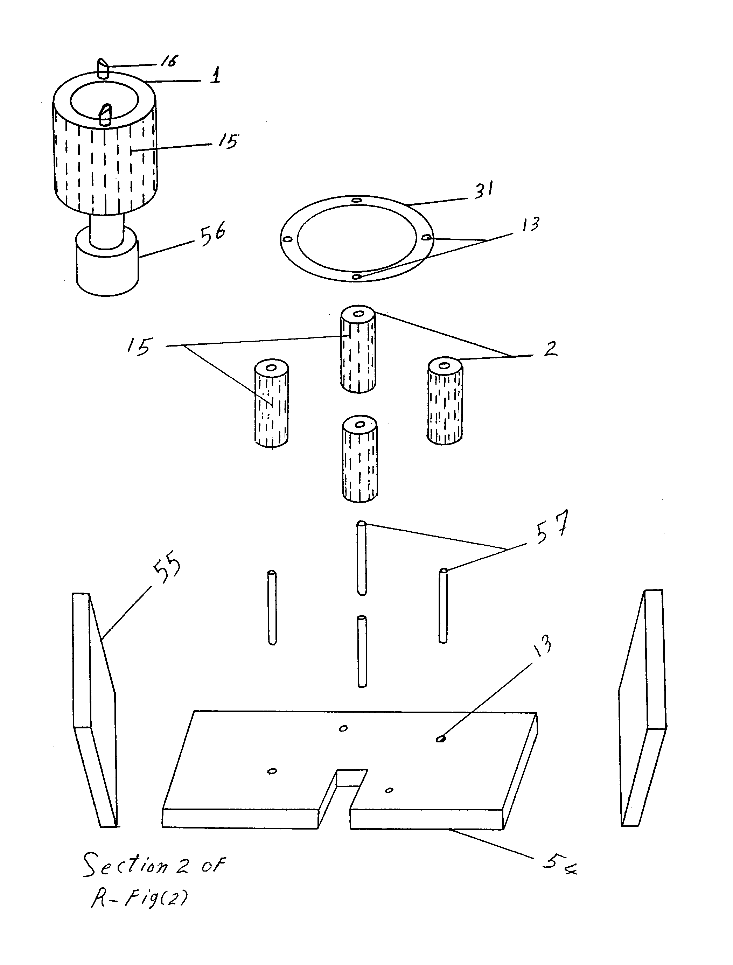

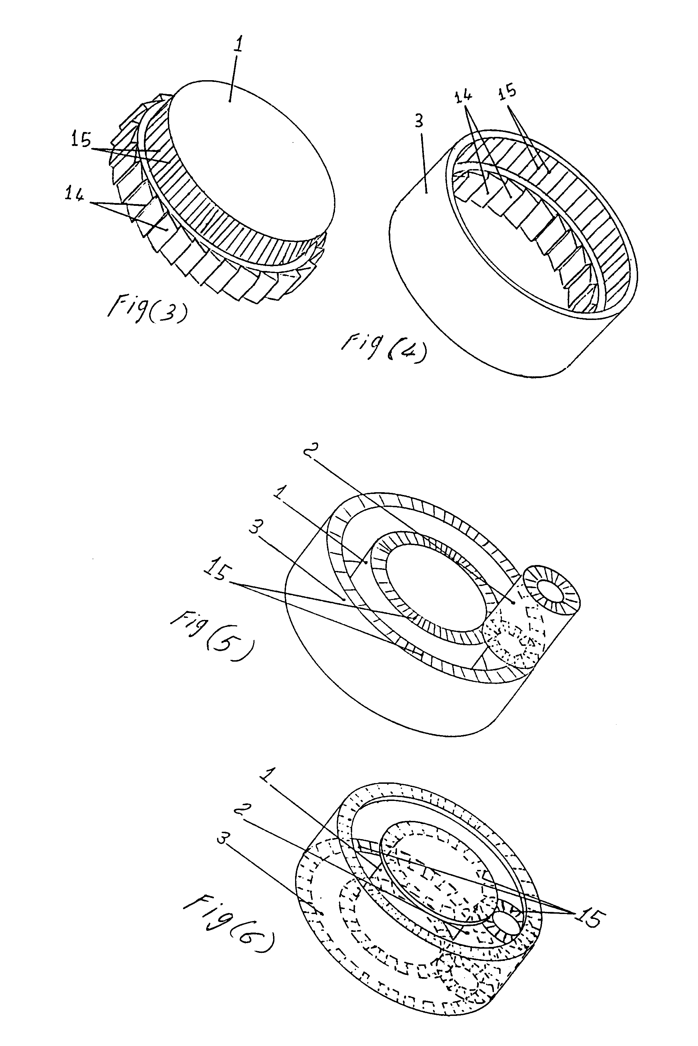

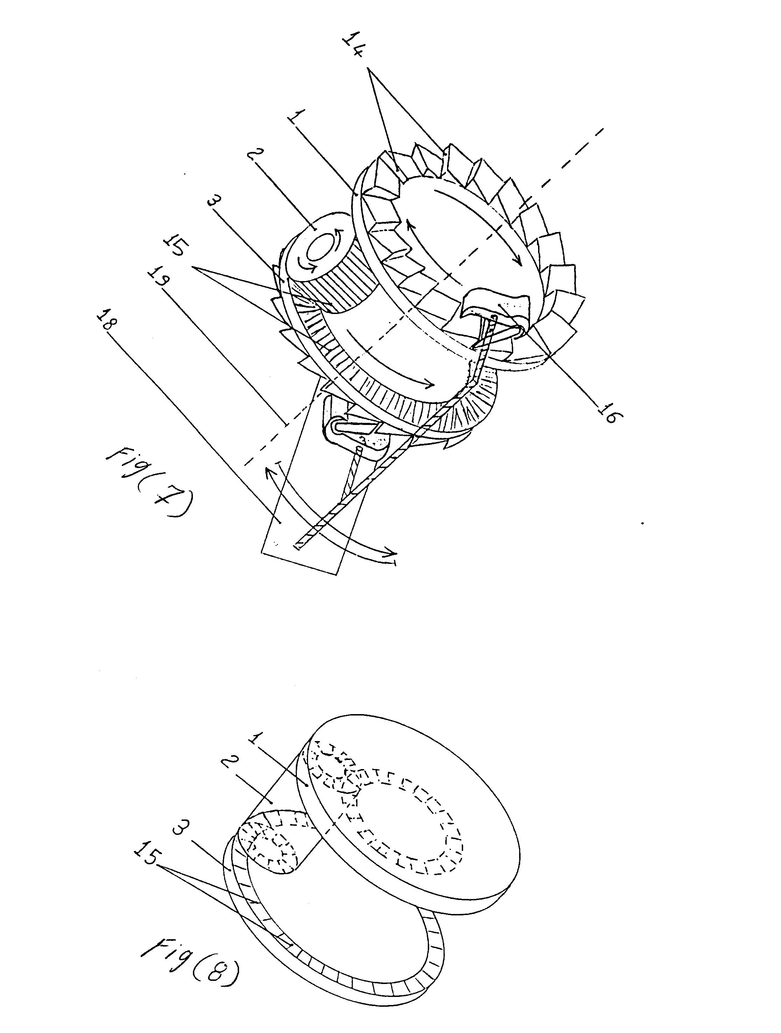

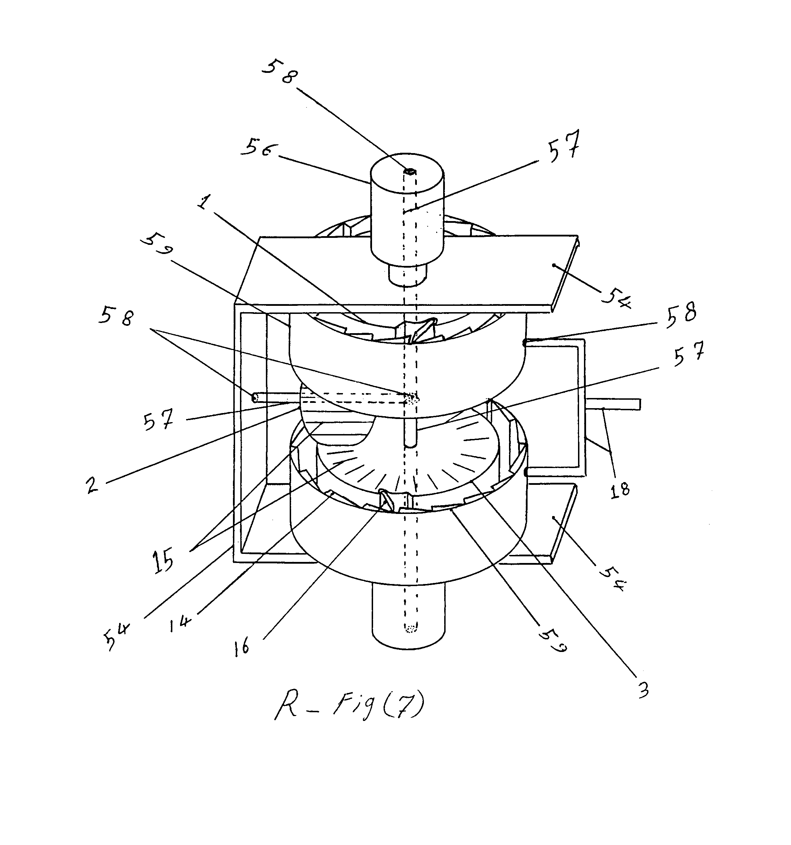

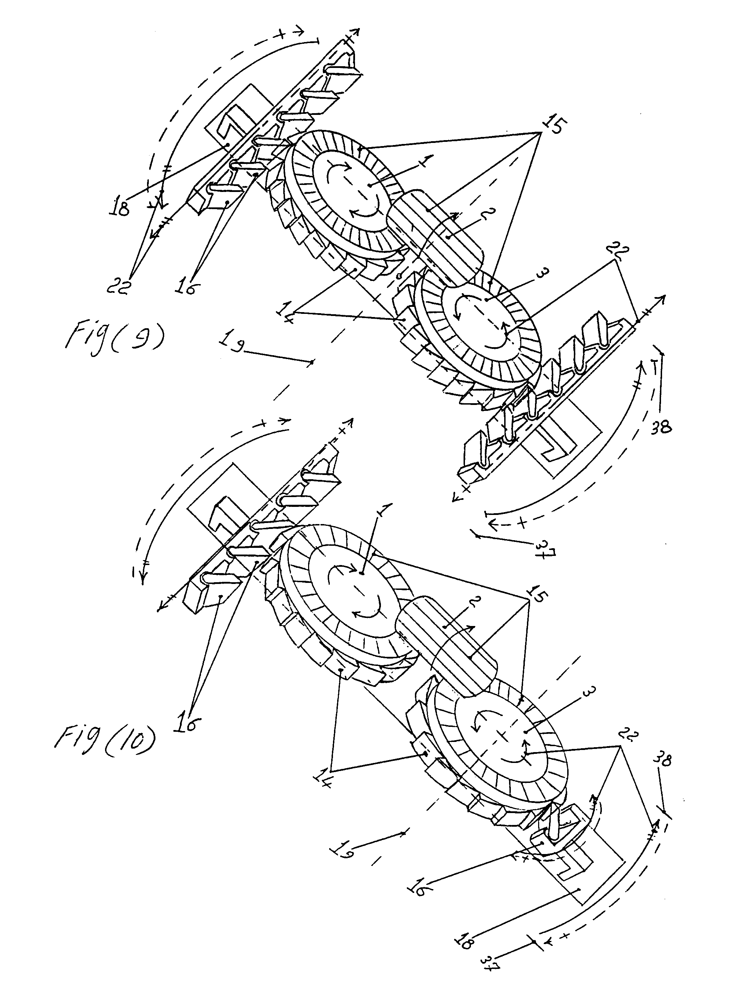

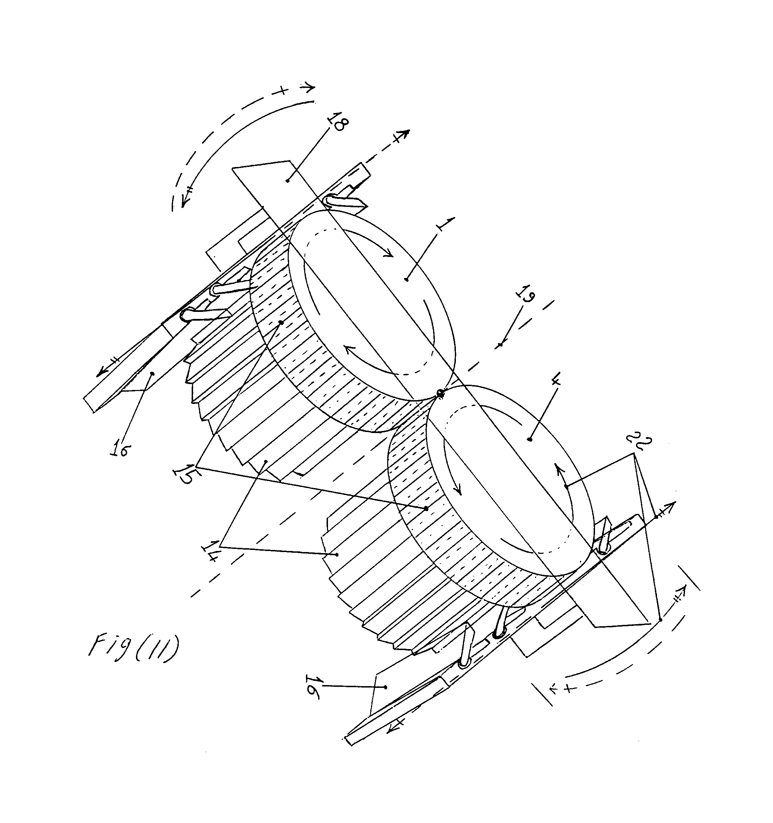

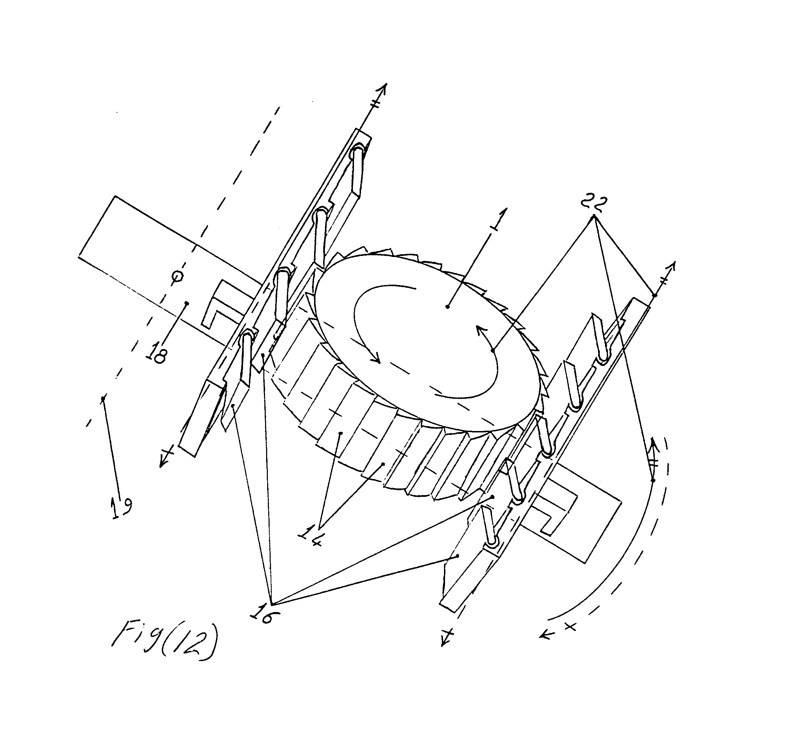

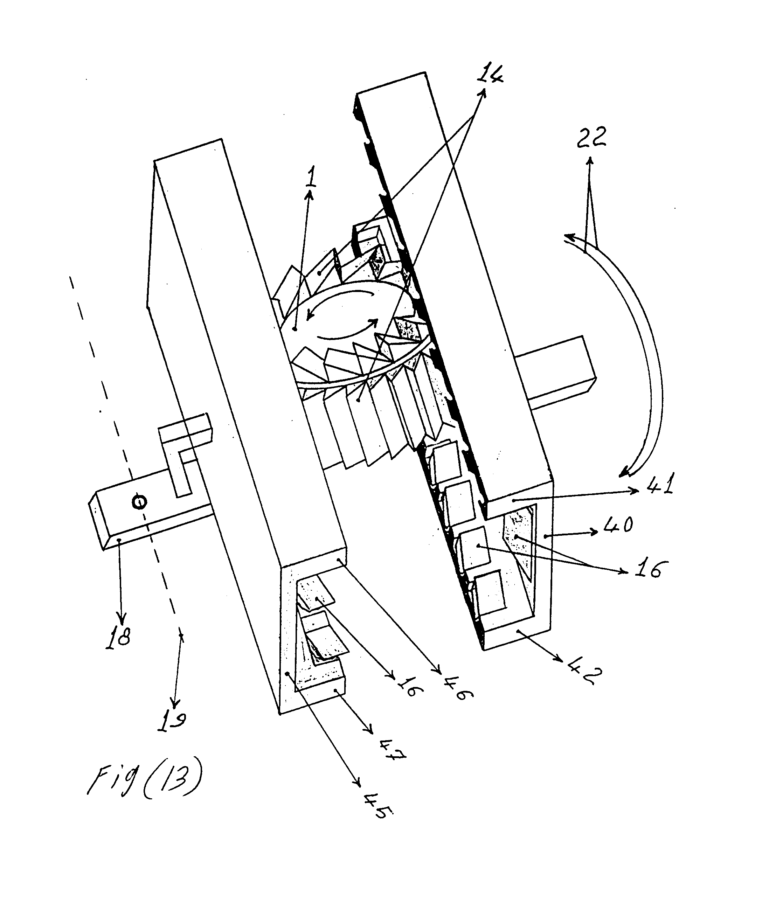

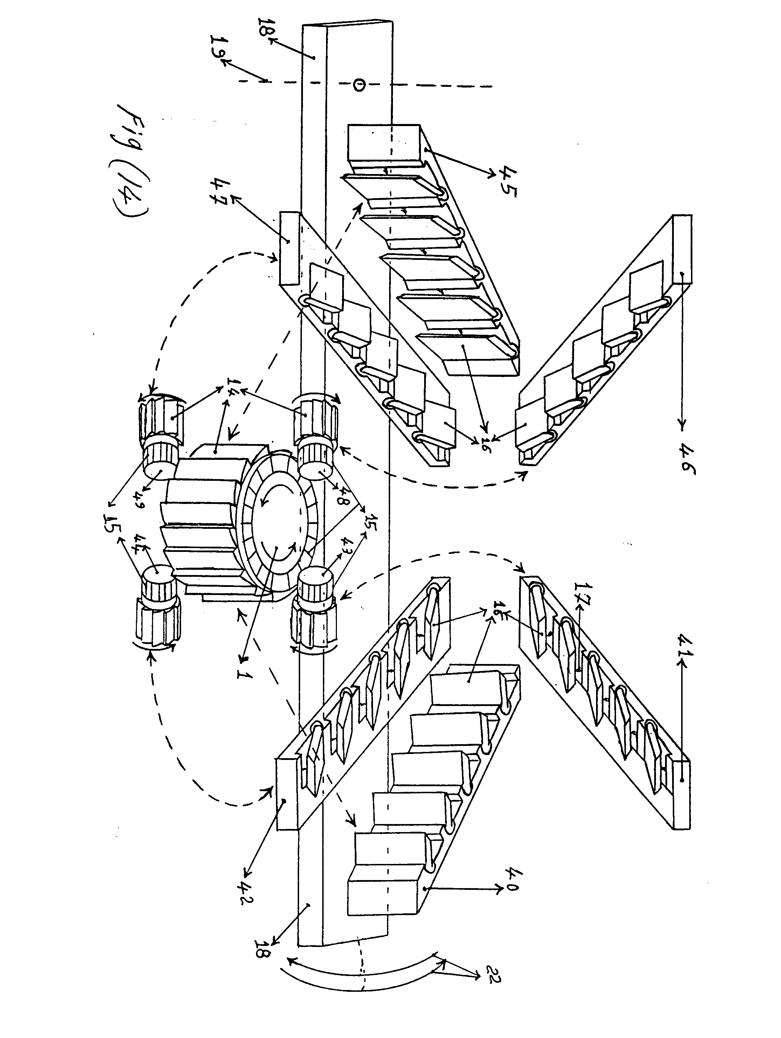

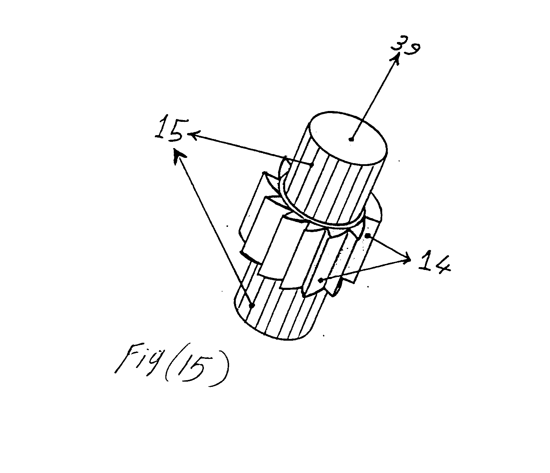

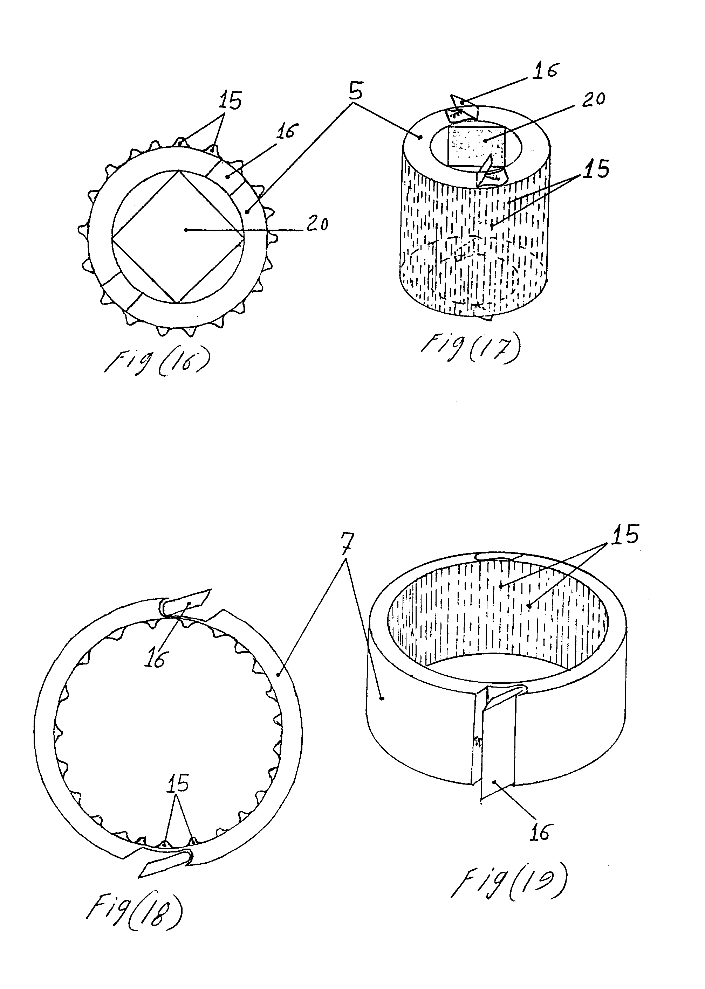

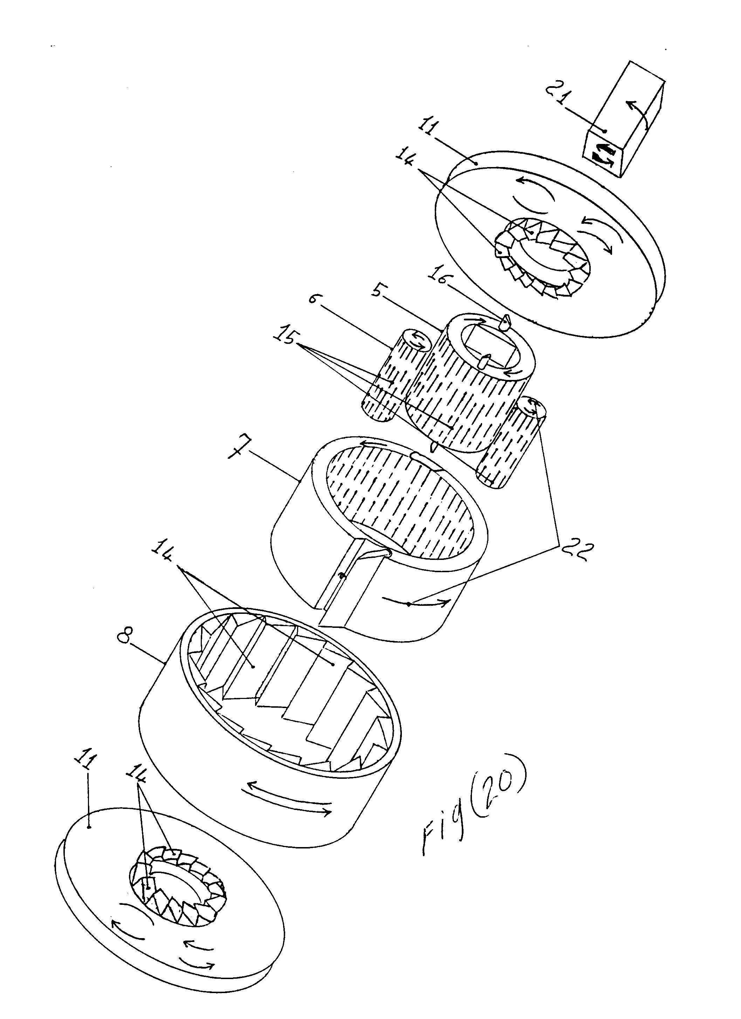

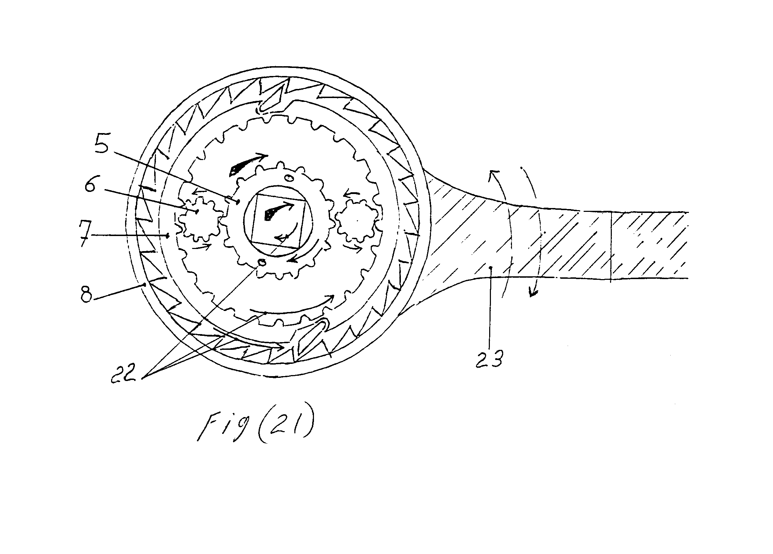

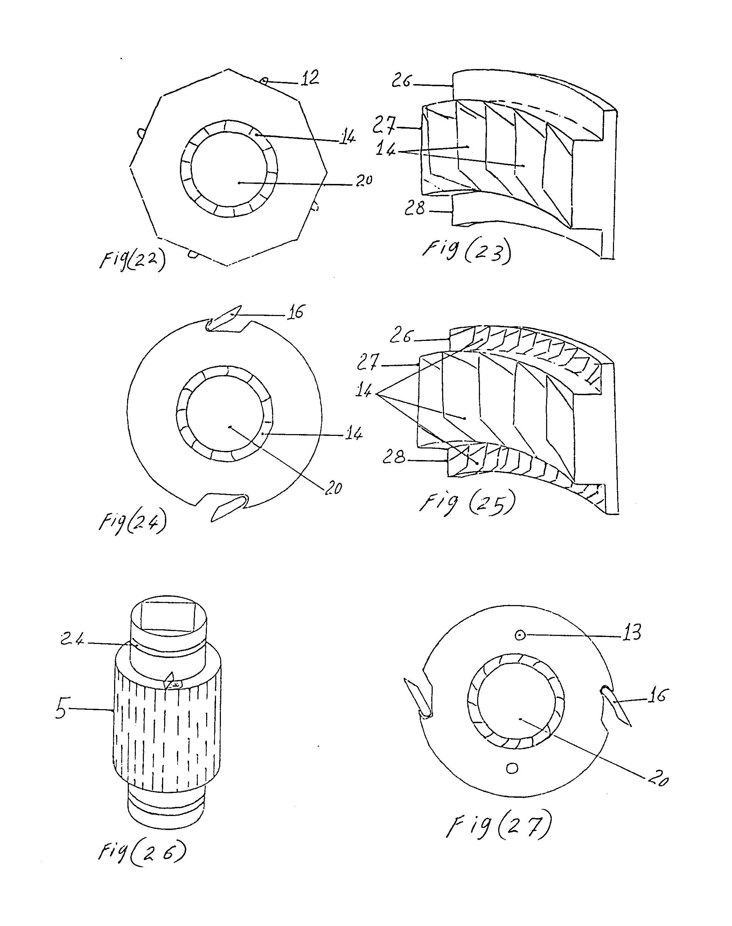

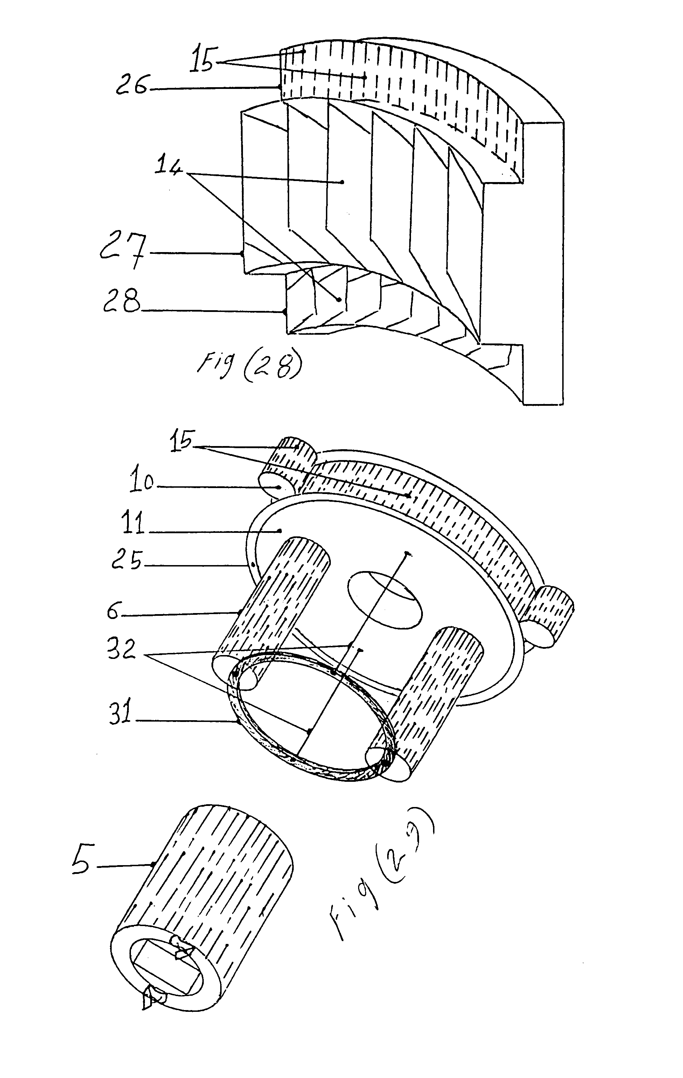

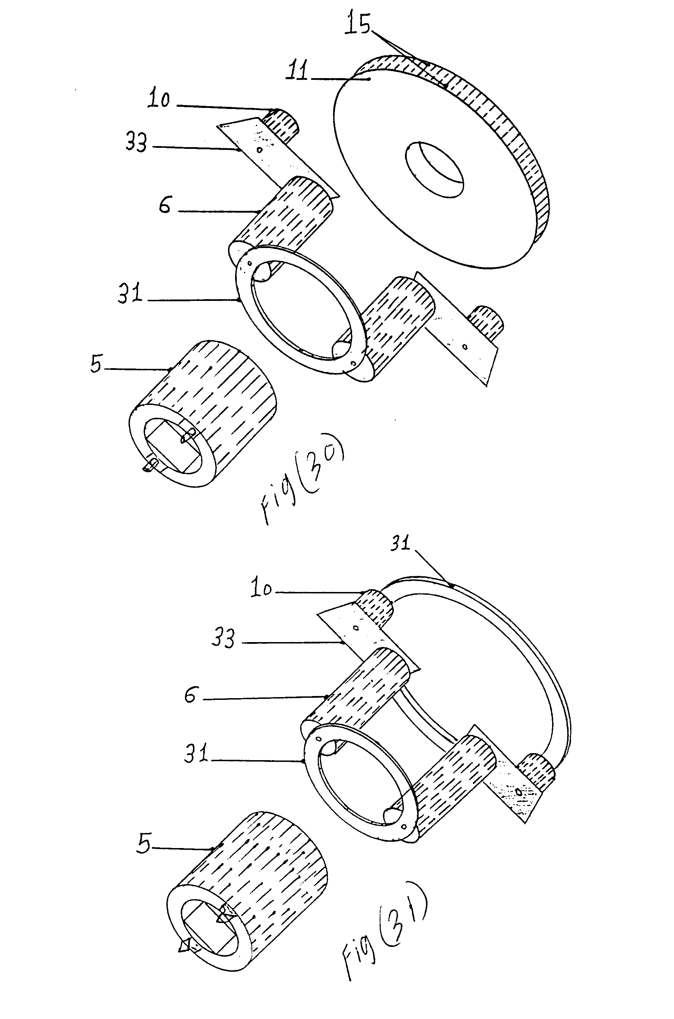

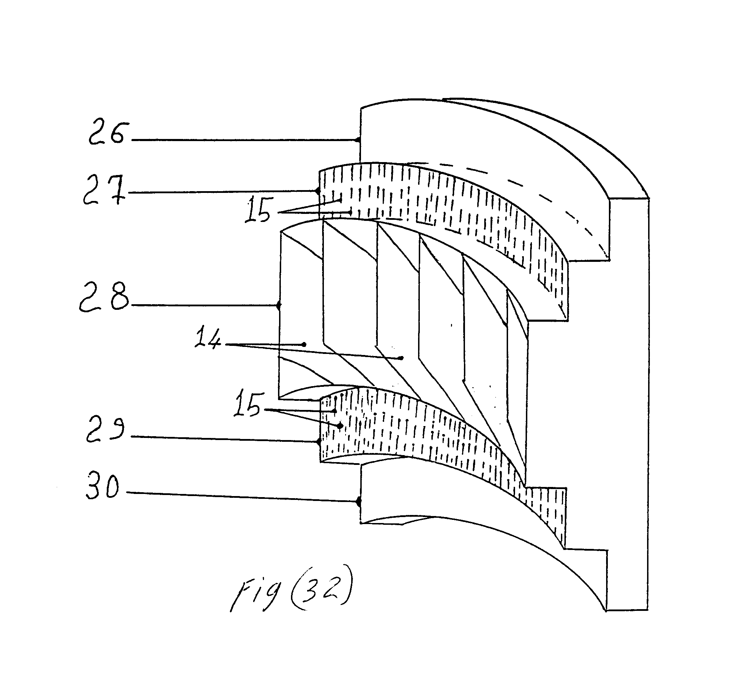

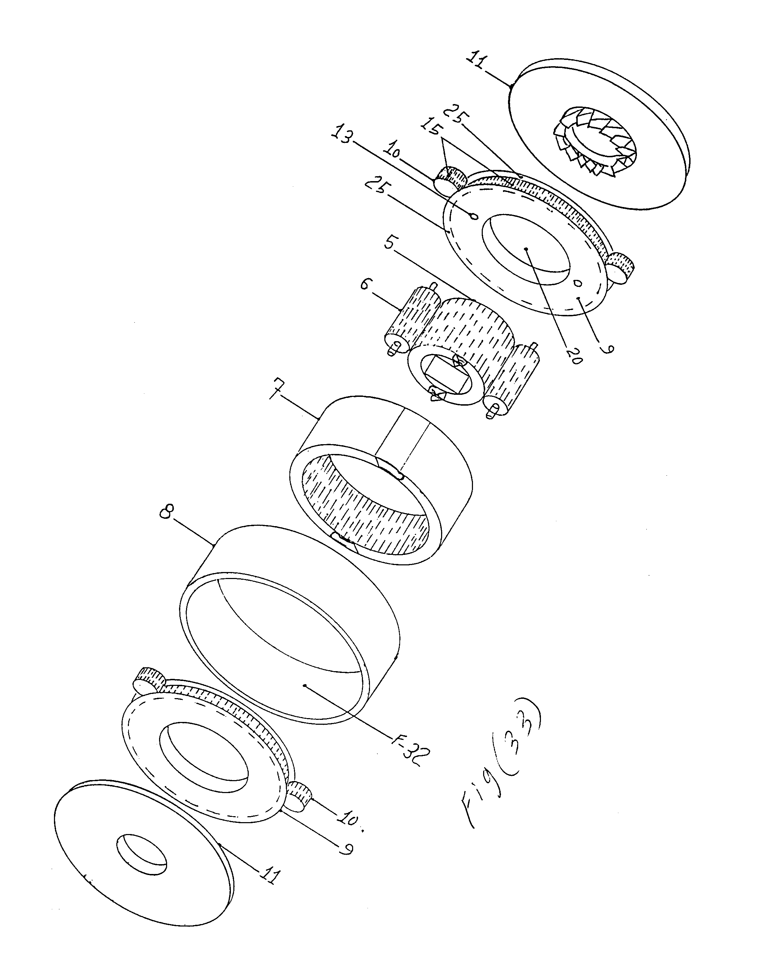

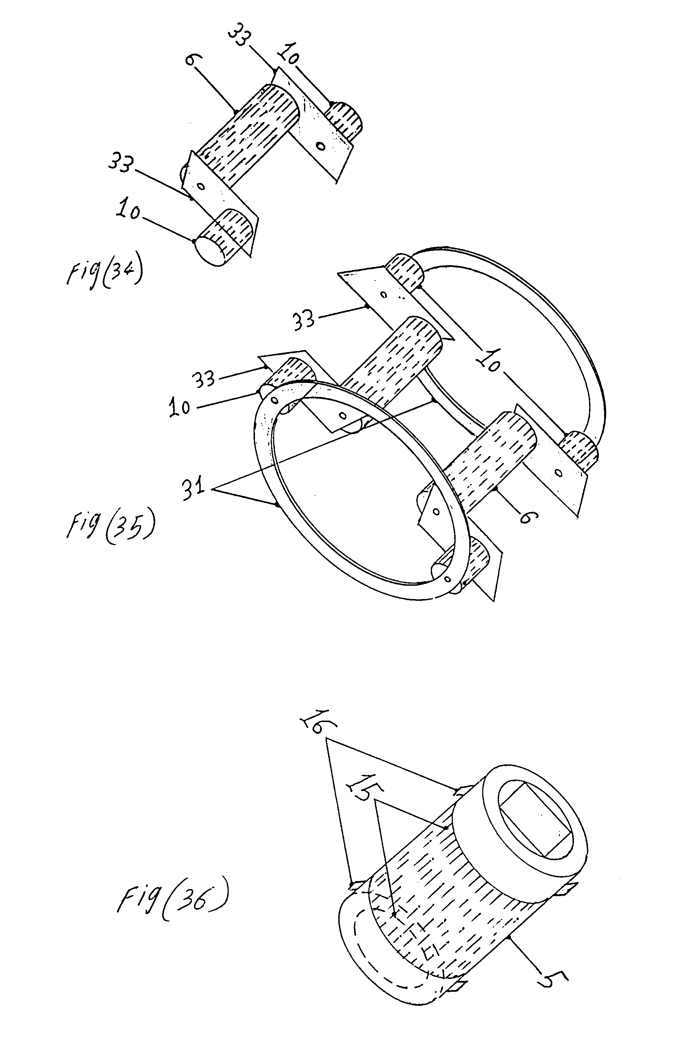

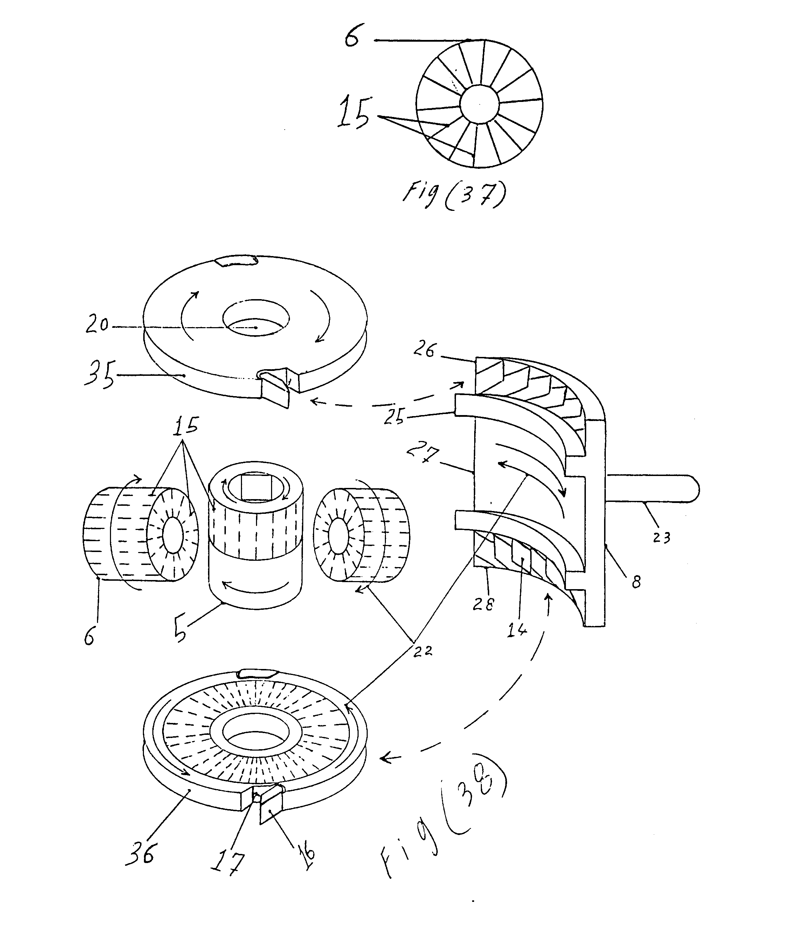

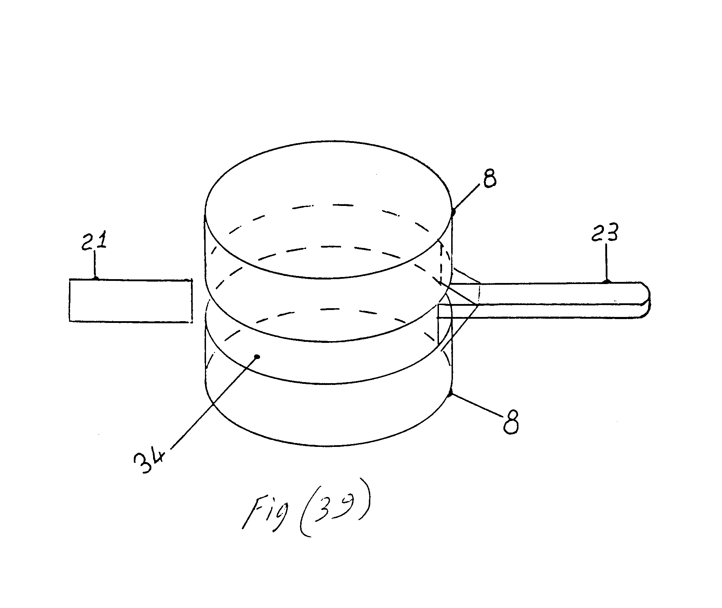

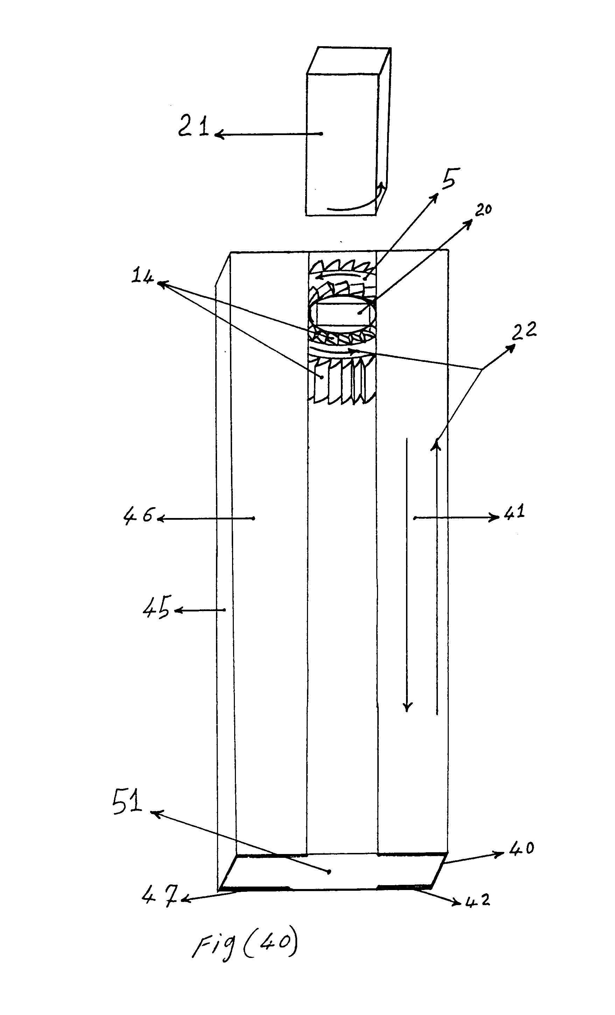

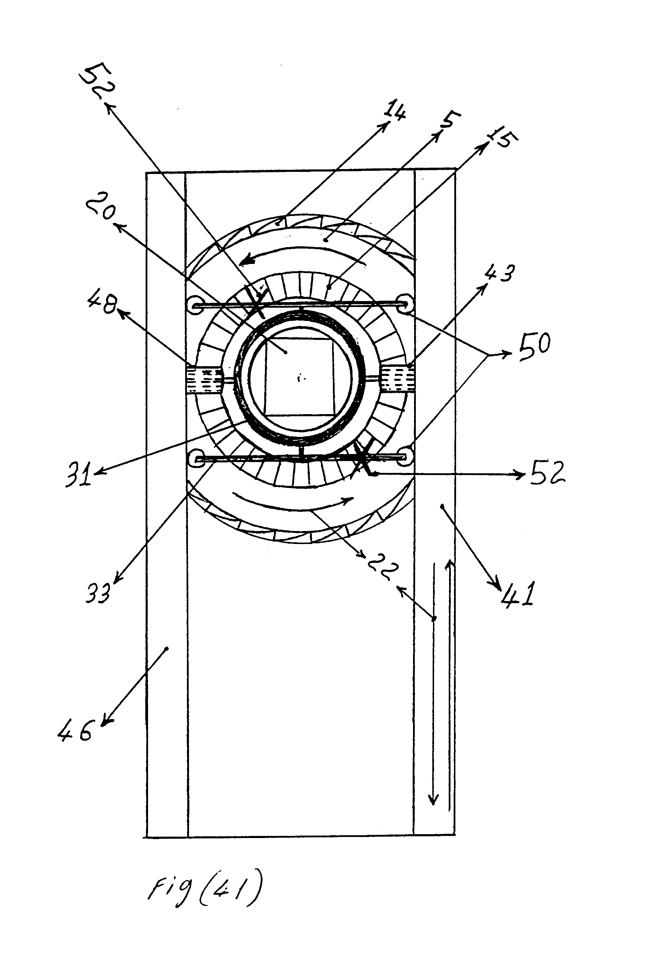

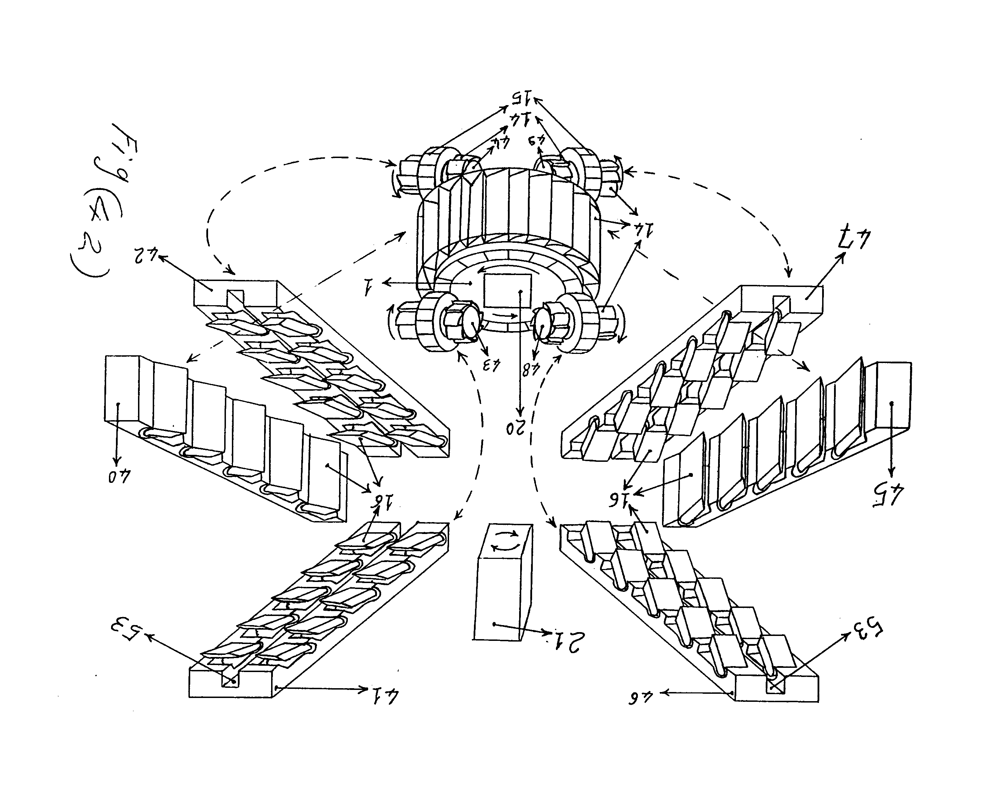

- This cylinder can be surroundig the cylinder which it will effect on, having the same rotation axis of it, and holding the brake nails on its internal surface.
- Or it can be surrounded by the cylinder which it will effect on, having the same rotation axis of it, and holding the brake nails on its external surface.
- Or it can be in an (upper or lower) position to the cylinder wich it will effect on, having the same rotation axis of it, and holding the brake nails on its (lower or upper) base.
- \* As we note in figure (R - fig2) that the nails holder of type (2) is a cylinder that surrounds ⟨C1⟩, having its rotation axis.

And that the nails holder of type (1) is an upper cylinder to ⟨A1⟩, having its rotation axis.

The nails holders of type (1) and type (2) are connected to each other in a suitable way (e.g screws) so they rotate together and in the same directions.

The motive force is connected to the nails holder of type (1) but please note that I've drawn the figur (R - fig2) according to note (16).

11 - In figure (10), we note that the nail of type (1) is a set of several consecutive nails carried on a special piece, the function of which is to hold the nails, so that the path of the nail forms a tangent of the external surface of the cylinder ⟨A1⟩, because this enables the nail of type (1) (or rather the nails of type (1)) to do its function .So we say that: The rotation centre of the motive force must not necessarily be on the rotation axis of the cylinder ⟨A1⟩ or the cylinder ⟨C1⟩ or both. It can has a different rotation axis. But in this case the positions, shapes and measurements of the nail of type (1), nail of type (2) or both must be suitable for the function needed.

For example: in figure (9), we can fix on the straight piece (B-C) a cylinder that can play the role of nail holder instead of the straight pieeces (that plays the role of nail holder). We can do this by means of the following:

- The internal diameter of that cylinder = [the diameter of the cylinder ⟨A1⟩ + the diameter of the cylinder ⟨C1⟩ + the distance between the cylinder ⟨A1⟩ and the cylinder ⟨C1⟩].
- And its rotation axis is the same rotation axis of the stright piece (B-C) in that figure.
- And the internal surface of that cylinder must be divided into two orbital areas above each other .The first area has brake nails, the inclination direction of which is suitable for the brake teeth of the cylinder ⟨A1⟩, and the second area has brake nails, the inclination direction of wich is suitable for the brake teeth of the cylinder ⟨C1⟩.
- The positions of the brake teeth of each one of the cylinders ⟨A1⟩ and ⟨C1⟩ to enable them to exchange the effects with the concerned brake nails so that they are not to be effected by the brake nails of the other cylinder (no figure).

12 - We note that in some cases, some (or all) of the cylinders of the toothed wheels of three types must not necessarily be hollow.This as due to the positions of the three cylinders and to the positions of the teeth on them. [For example: in figure (7), we note that none of the three cylinders must be hollow].

13 - The toothed wheels are not necessarily to be cylinders. They can take any other geometric shape (such as a cone or a conic section etc.), on condition that they meet their functions needed.

14 - We can use more than one cylinder of each type. Also we can use more than one nail of each type.

15 - If we regard any toothed area with brake teeth as a brake toothed wheel, and if we regard any toothed area with gearing teeth as a gearing toothed wheel, we can say that we can use more than one toothed wheel of each of these toothed wheels.

16 - The brake nails must not necessarily be put on the motive bodys, and the brake teeth must not necessarily be put on the moved bodys. Instead the brake nails can be put on the moved bodys, and the brake teeth can be put on the motive bodys.

17 - Number, measurements, shapes and positions of all elements in the method must be suitable for the function needed of them to do the method.

And to suit the function needed of the method when we want to apply it in some mechanical matter, (that is to be studied by the designer of that application).

18 - Fixation ways of cylinders, brake nails, and motive force must be suitable for the function needed of all elements in the method to do the method, and to suite the function need of the method when we want to apply it in some mehanical matter.

(What I mean by the word fixation is: Fixing, replacing, and holding). This fixation can be don in many ways and probabilities, though I'll describe some of those ways as examples.

I - The fixation of (fig.2)

Let us suppose that the application of this method is a box in order to be the stationary part comparing to the moving elements, in the method.

We give in to this box a rotatory sine motion, and this box will give out from it a one - direction rotatory motion, for that we do the following:

- Fix ⟨C1⟩ by putting it on the lower base of the box (ie. by putting it between lower and upper bases of the box) or we can fix it on the movable part of a roller - bearing where the stationary part of this roller - bearing is fixed on lower base of the box.
- ⟨A1⟩ is having its brake teeth on the upper base of it, we fix it where it is apt to rotate only round its rotation axis.
- Fix each of ⟨B1⟩ with an axis, one end of this axis is fixed on the lower base of the box, the other end of this axis is fixed on a circle, (on the area between its internal diameter and its external diameter, there are locations for placing those ends of axises to be as a stiffener fixer for them). Measurments and position of this circle are to suit the function needed of it and not to cause any negative effects on the elements in method.

So ⟨B1⟩ is apt to rotate only round its rotation axis.

- The brake nail of type (1) takes the shape of a cylinder as a nails - holder.
this nails - holder is put where it is in an upper position for ⟨A1⟩, having the same rotation axis of ⟨A1⟩, and is holding the brake nails on its lower base in the orbital area wich is a parallel to the orbital area that having the break teeth in the upper base of ⟨A1⟩.

brake nails are put so they can do the function needed of them, measurments of nails - holder are to suit the function needed of it and not to cause any nigative effects on the method.

- The brake nail of type (2) takes the shape of a cylinder as a nails - holder.
this nails - holder is put where it surrounds ⟨C1⟩, having its rotation axis, and is holding the brake nails on its internal surface.

brake nails are put so they can do the function needed of them, measurments of nails - holder are to suit the function needed of it and not to cause any nigative effects on the method.

- The nails - holder of type (1) and the nails - holder of type (2) must be connected to each other in a suitable way (e.g serews).
- The motive force will be connected in a suitable way with one of the two nails - holders, let it be the nails - holder of type (1), so the upper base of the box will be having a suitable hole for the motive force can pass through. please note that the actual fixation of ⟨C1⟩ is putting it between the lower base of the box and lower base of the nails - holder of type (1).
- Transmit the motion of ⟨A1⟩, ⟨B1⟩, or ⟨C1⟩ to the out of the box by a suitable transmitter (eg- we can expan the motion of them to the out of the box).

  To expan the motion of ⟨A1⟩, ⟨A1⟩ will be connected by an axis to another cylinder locates on that axis in the out of the box, The aim of that axis is to rotate the cylinder which locates in the out of the box in the supposed direction of ⟨A1⟩ when ⟨A1⟩ rotates in that direction, the lower base of the box will be having a suitable hollow cranny for entering or removing out the axis with the two cylinders (⟨A1⟩ and the cylinder which is out of the box) in the case that this axis is a statiory axis for bouth cylinders.

  or that lower base will be having a suitatble hole for entering and taking - out that axis in the case that this axis is a removable from those two cylinders (⟨A1⟩ and the cylinder which is out of the box).

- So we can expan the motion of ⟨B1⟩ as in ⟨A1⟩.
- Also we can expan the motion of ⟨C1⟩ when the lower base of ⟨C1⟩ is having an orbital projection that gets out of a side of the box.

  please note that in this case the nails - holder of type (2) is put between that orbital projection and the upper base of the box (no figure). Ofcourse measurements of that orbital projection, and of all elements of the method, are to suit the function needed of the method.

- Figure (R - fig2) helpes in illustrating this fixation, please note that I have drawn this figure according to note (16) for the brake teeth and nails.

II - The fixation of (fig7):

A -In the case that the stationary part is three fixation board are put and connected to each other in a suitable way.

- Fix ⟨A1⟩ and ⟨C1⟩ on the two fixation boards with one axis in a suitable way.
- Fix ⟨B1⟩ on an axis, one end of this axis is fixed on the axis of ⟨A1⟩ and ⟨C1⟩, and the other end is fixed on the third fixation board.
- The brake nail of type (1) takes the shape of a cylinder as a nails - holder.

  this nails - holder is put where it surrounds ⟨A1⟩, having its rotation axis, and is holding the brake nails on its internal surface where ⟨A1⟩ is having its brake teeth on its external surface, and ⟨A1⟩ will be having an orbital projection in a suitable way, the aim of this orbital projection is to help in the fixation of nails - holder of type (1), so that nails - holder will be put between that orbital projection and the fixation board.

- The nails - holder of type (2) will be similar to type (1) but to suit ⟨C1⟩.
- The motive force will be connected with both nails - holders of type (1) and type (2) in a suitable way.
- We transmit the motion of ⟨A1⟩, ⟨C1⟩, or ⟨B1⟩ to the out of the fixation boards in a suitable transmission way (eg. we expan the motion of them to the out of the fixation boards).

B - In the case that the stationary part is mor than three fixation boards (eg. a box).

the fixation in this case will be the same of the previous case but ⟨A1⟩ and ⟨C1⟩ will be having thiere brake teeth on the external surface of thier expand cylinders (in the out of the box), where the external surface of each of those cylinders will be having an orbital area that holds the brake teeth, and the rest of the surface is to be the body wanted to be moved in the out of the box.

* This case is better than the previous case by being it helpfull for stiffing the end of the axis of ⟨B1⟩, and also that we can use mor than one of ⟨B1⟩, and that it doesn't avoid the path of the motive force for being a circle. (no figure).

III - The fixation of (fig.9):

- Each of ⟨A1⟩ and ⟨C1⟩ is fixed on an axis, one end of this axis is fixed on an upper fixation board and the other end is fixed on a lower fixation board.
- ⟨B1⟩ will be fixed on an axis, one end of this axis is fixed on the axis of ⟨A1⟩ and the other end is fixed on the axis of ⟨C1⟩.

- nails - holder will be as axplaind after the word (for example) in note (11), and the fixation of this nails - holder will be by putting it between the two fixation boards, and the two fixation boards will be connected with each other in a suitable way (eg. the axises of ⟨A1⟩ and ⟨C1⟩).
- The motive force will be connected with the nails - holder in a suitable way.
- We transmit the motion of ⟨A1⟩, ⟨C1⟩ or ⟨B1⟩ to the out of the fixation boards in a suitable way, (e.g we expan the motion of them to play the role of the body wanted to be moved in the out of the fixation boards). (no figure).

19 - The motion of the moved body must not necessarily be rotatory. Its path can take several shapes.

We can do this when we make the shape of the moved body suitable for that path, or when we transmit the motion of the cylinder which plays the role of the moved body to the moved body itself, which takes a suitable shape in order to achieve the required path.

For example: in figure (7), if the base of the cylinder ⟨A1⟩ is in the shape of an ellipse instead of a circle, its motion will be a one direction motion, the path of which is an ellipse.

Another example: If the lateral surface of this cylinder (in the same figure) is covered by gearing teeth, and if we put a straight piece in order to play the role of the moved body, and if the surface of this straight piece is covered by gearing teeth that are apt to turn and gear with the gearing teeth of that cylinder ⟨A1⟩, so that the straight piece is a tangent of the lateral surface of the cylinder ⟨A1⟩, and so that the rotating and gearing aptitude among the concerned gearing teeth will be achieved.

the motion of the straight piece which plays the role of the moved body will be a one-direction motion of a straight path (No figure concerning this note).

20 - On the other hand (of note (19)), the motion of (the body that plays the role of the motive force) must not necessarily be rotatory.

21 - The cylinder ⟨B1⟩ can do the function needed of it as (a transmiter in the opposite direction). in case that it is rotating round its rotation axis only, or round its rotation axis and another rotation axis (e.g axis of ⟨A1⟩) at the same time in a suitable position and speed. i.e - if the board (wich ⟨B1⟩ is fixed on) is rotating (for any reason) round the rotation axis of ⟨A1⟩ in a suitable position and speed. ⟨B1⟩ can do the function needed of it. That's why I said about ⟨B1⟩ in the technical description "its prefered (not absolutely must) to be rotating only round its rotation axis".

22 - The numbers of these notes are not arranged according to any order. Any note can concern any previous or later note (in addition to the fact that it basically concerns the technical description).

23 - The important notes are essential parts of the technical description of this method.

**These are the important notes concerning the first method used for the exploitation of the rotatory sine motion. So this method has been finished.

2-1) The second method used for the exploitation of the rotatory sine motion

- This is in principle slightly different from the previous method. Here the cylinder ⟨B1⟩ does the functions of the cylinder ⟨B1⟩ and the cylinder ⟨C1⟩ at the same time (i.e.we can do without the cylinder ⟨C1⟩) This can be done as follows:

The cylinder ⟨B1⟩ is in a different shape. It carries the brake teeth and the gearing teeth. Here we shall call it the cylinder ⟨BC1⟩.

The cylinder ⟨BC1⟩ will be put beside the cylinder ⟨A1⟩, so that the gearing teeth of the two cylinders can turn and gear with each other, so that if the cylinder ⟨BC1⟩ turns, the cylinder ⟨A1⟩ will turn conversely. (in the opposite direction).

- We shall fix the cylinder ⟨BC1⟩ so that it will be apt to turn only round its rotation axis (which passes through its centre) or both round its rotation axis and round another rotation axis, on the condition that this rotation and its direction will not cause any negative effects on the needed motion.
- We shall put the straight piece (B-C) in a suitable position, (as far as its rotation axis is concerned) see figure (11), and we shall put the brake nails so that they will be suitable for the brake teeth of the cylinder ⟨BC1⟩ and the brake teeth of the cylinder ⟨A1⟩ (on the suppose that the motive force is still the straight piece (B-C).

Now we note that:

In the first half period of the motion of the straight piece (B-C), the cylinder ⟨A1⟩ rotates in the same rotation direction of the straight piece (B-C) (as a result of the effect of the brake nail and the brake toothed wheel).

In the second half period of the motion of the straight piece (B-C), the cylinder ⟨BC1⟩ rotates in the same direction of the straight piece (B-C) (as a result of the effect of the brake nail and brake toothed wheel).

Consequently the cylinder ⟨A1⟩ rotates in the opposite direction as a result of the gearing between it and the cylinder ⟨BC1⟩. So we have achieved our aim of this method.

Figure (11) illustrates this.

* This is the second method used for the exploitation of the rotatory sine motion (in general). Therefore we must mention some important notes about it, which are two.

I shall mention them now:

2-2) Important notes about this method

1. All (or some) of the important notes about the first method used for the exploitation of the rotatory sine motion are also important notes about this method after adapting them so that they become suitable for it.

2. This previous note is a part and parcel of the technical description of this method.

\*\*These are the important notes about this method, So this method has been finished.

3-1) The third method used for the rotatory sine mtion

To apply this method, we need the following:

- A cylinder that has brake teeth on its external surface in order to play the role of the body wanted to be moved. (We shall call this cylinder ⟨A1⟩).
- Two brake nail holders together with their nails, as illustrated in figure (9).
  We shall call them brake nail holder ⟨K⟩ and brake nail holder ⟨L⟩.
  We shall suppose that the motive force is the straight piece (B-C) itself.
  Now:
- The plane in which the piece (B-C) is turning must be parrallel to the plane in which the cylinder ⟨A1⟩ is turning, and the rotation axis of the piece (B-C) must be parallel to the rotation axis of the cylinder ⟨A1⟩, and outside that cylinder.
  We shall put the first nail holder ⟨K⟩ on a suitable point on the straight piece (B-C) so that it will be a tangent of the external surface of the cylinder ⟨A1⟩, so that its nails can exchange the effects with the brake teeth of the cylinder ⟨A1⟩.
  We shall put the nail holder ⟨L⟩ on another suitable point on the straight piece (B-C), (This point will be counterpart to the previous point according to the rotatio axis of the cylinder ⟨A1⟩), so that it will be a tangent of the external surface of the cylinder ⟨A1⟩. so that its nails can exchange the effects with the brake teeth of the cylinder ⟨A1⟩.
  So the two nail holders are tangents of counterpart ends of the cylinder ⟨A1⟩.
- We must fix the nail holders on the straight piece (B-C), so that each one of them will remain a tangent of the external surface of the cylinder ⟨A1⟩, when the piece (B-C) is in a rotatory sine motion,i.e. the nail holder will be in a straight sine motion.

The Mechanism of this Method

- When the straight piece (B-C) is rotating counter-clockwise, and when it is in the first half period of its motion we note that the nail holder ⟨K⟩ turns the end which it touches (and which is far from the rotation axis of the piece (B-C)) in the motion direction of that holder, and the second holder here has no effect on the end which it touches other than friction, which is supposed to be trivial (if there is any friction at all).
  Consequently the cylinder ⟨A1⟩ will rotate also counter-clockwise.
- In the second half period (when the rotation direction is clokwise), we note that the nail holder ⟨L⟩ turns the end which it touches (and which is near the rotation axis of the piece (B-C)) in the motion direcion of that holder, and the first holder here has no effect on the end which it touches other than friction, which is supposed to be trivial (if there is any friction at all).
  Consequently the cylinder ⟨A1⟩ will rotate also counter-clockwise.
- So we have achieved the aim wanted of this method.
- Figure (12) illustrates this method.
* This is the third method used for the exploitation of the rotatory sine motion (in general) Therefore we must mention some important notes about it (which are three notes):

3-2) Important notes concerning this method

    1. All (or some) of the important notes about the first method used for the exploitation of the rotatory sine motion are also important notes for this method after adapting them so that they become suitable for it.

    2. According to the note (1) of the important notes about the first method used for the exploitation of the rotatory sine motion:

The cylinder ⟨A1⟩ may carry brake teeth on its bases in addition to the teeth on its external surface.

Consequently the nail holder ⟨K⟩ will consist of the three nail holders ⟨K⟩,⟨K1⟩ and ⟨K2⟩.

    So that ⟨K⟩ will be suitable for the brake teeth of the relevant end on the lateral surface of the cylinder ⟨A1⟩.

And so that ⟨K1⟩ will be suitable for the brake teeth relevant on the top base of that cylinder.

And so that ⟨K2⟩ will be suitable for the brake teeth relevent on the bottom base of that cylinder.

Also the nail holder ⟨L⟩ will consist of three nail holders ⟨L⟩,⟨L1⟩ and ⟨L2⟩. And Figure (13) illustrates this.

    Note: I have mentioned this note (2) so that it will help me to explain the fourth method used for the exploitation of the rotatory sine motion.

    3. These notes are essential parts of the technical description of this method.

** These are the important notes about this method. So this method has been finished.

4-1) The fourth method used for the exploitation of the rotatory sine motion

    Introduction:

This method is the same (third method used for the exploitation of the rotatory sine motion) with the addition of a simple modification which is the cylinders ⟨G⟩ for improving the motion as we shall note later.

To apply this method, we need the following:

    * A cylinder with brake teeth on its external surface and gearing teeth on both its top and bottom bases (or orpital areas for each) which we shall call ⟨A1⟩ see figure ⟨14⟩.

    * Two brake nail holders together with their nails (nearly like those illustrated in the note (2) in the third method used for the exploitation of the rotatory sine motion). We shall call them the same names (⟨K⟩,⟨K1⟩,⟨K2⟩ and ⟨L⟩,⟨L1⟩,⟨L2⟩) i.e. each nail holder consists of three nail holders, but:

    The inclination direction of the brake nails of ⟨K⟩ is the same inclination direction of the brake nails of ⟨L1⟩,⟨L2⟩ and consequently opposit the inclination direction of the brake nails of ⟨K1⟩,⟨K2⟩. And the inclination direction of the brake nails of ⟨L⟩ is the same inclination direction of the brake nails of ⟨K1⟩,⟨K2⟩ and consequently opposit the inclination direction of the brake nails of ⟨L1⟩,⟨L2⟩. see figure (14).

    We need some cylinders (4 for example) and we shall divide the external surface of each of these cylinders into two orbital areas: One of these areas will have brake teeth to be suitable for the brake nails of ⟨K1⟩,⟨K2⟩,⟨L1⟩ and ⟨L2⟩ [supposing that ⟨K1⟩, ⟨K2⟩, ⟨L1⟩ and ⟨L2⟩ are similar and that the cylinders are also similar (of course this is not necessary, but I supposed this to facilitate the explanation)].

    The second area will have gearing teeth that are apt to gear and turn with the gearing teeth of the cylinder ⟨A1⟩.

    So that these cylinders will play the role of a transmitter (and let us call them the cylinders ⟨G⟩), see figure (14), and let us suppose that the motive force is the straight piece (B-C) itself.

    Now:

We arrange the matter so that the plane in which the piece (B-C) turns will be parallel to the plane in which the cylinder ⟨A1⟩ rotates, and that the rotation axis of the piece (B-C) will be parallel to the rotation axis of the cylinder ⟨A1⟩ and outside that cylinder.

    And we shall put two cylinders ⟨G⟩ on the top base of the cylinder ⟨A1⟩, and two cylinders ⟨G⟩ on the bottom base of the cylinder ⟨A1⟩.

    So that:

The two cylinders ⟨G⟩ on the top base will be counter part to each other according to the rotation axis of the cylinder ⟨A1⟩.And the two cylinders ⟨G⟩ on the bottom base will be counter part to each other according to the rotation axis of the cylinder ⟨A1⟩. And each cylinder ⟨G⟩ on the top base and cylinder ⟨G⟩ on bottom base will be counter part to each other according to the plane that passes through the center of the cylinder ⟨A1⟩ and wich is vertical on its rotation axis.

    And so that:

The gearing teeth of each cylinder ⟨G⟩ will be apt to rotate and gear with the relevant gearing teeth of the base of the cylinder ⟨A1⟩.

And we shall put the nail holder (⟨K⟩,⟨K1⟩,⟨K2⟩) on a suitable point of the straight piece (B-C).

So that:

⟨K⟩ will be a tangent of the external surface of the cylinder ⟨A1⟩ so that its brake nails will exchange the effects with the brake teeth of ⟨A1⟩.

And ⟨K1⟩ will be a tangent of the orbital area that has brake teeth in the cylinder ⟨G⟩ on the top base so that its brake nails will exchange the effects with the brake teeth of this cylinder ⟨G⟩.

- And ⟨K2⟩ will be a tangent of the orbital area that has brake teeth on the cylinder ⟨G⟩ on the bottom base so that its brake nails will exchange the effects with the brake teeth of this cylinder ⟨G⟩.

And we shall put the nail holder (⟨L⟩,⟨L1⟩,⟨L2⟩) on a suitable point of the piece (B-C). So that:

⟨L⟩ will be a tangent of the external surface of the cylinder ⟨A1⟩ (at the point wich is counter part to the tangency point of ⟨K⟩ with ⟨A1⟩) so that its brake nails will exchange the effects with the brake teeth of ⟨A1⟩.

And ⟨L1⟩ will be a tangent of the orbital area that has brake teeth in the cylinder ⟨G⟩ on the top base (and its counterpart to ⟨G⟩ which is relevant to ⟨K1⟩) so that its brake nails will exchange the effects with the brake teeth of this cylinder ⟨G⟩.

And ⟨L2⟩ will be a tangent of the orbital area that has brake teeth in the cylinder ⟨G⟩ on the bottom base (and its counterpart to ⟨G⟩ which is relevant to ⟨K2⟩) so that its brake nails will exchange the effects with the brake teeth of this cylinder ⟨G⟩.

Note:

In order to fasilitate the explanation:

The cylinder ⟨G⟩ relevant to ⟨K1⟩ will be called the cylinder ⟨GK1⟩.

The cylinder ⟨G⟩ relevant to ⟨K2⟩ will be called the cylinder ⟨GK2⟩.

The cylinder ⟨G⟩ relevant to ⟨L1⟩ will be called the cylinder ⟨GL1⟩.

The cylinder ⟨G⟩ relevant to ⟨L2⟩ will be called the cylinder ⟨GL2⟩.

- Of course the nail holders will be fixed on the straight piece (B-C) so that each of them will be a tangent of the relevant surface in the cylinder with which it exchanges the effects when the straight piece (B-C) is in rotatory sine motion(i.e. so that the nail holders will be in straight sine motion).

And the inclination directions of the brake nails and brake teeth will be So that:

If we move all nail holders in one direction:

⟨K⟩ will turn the cylinder ⟨A1⟩, and ⟨L1⟩ and ⟨L2⟩ will turn the cylinders ⟨GL1⟩ and ⟨GL2⟩, and ⟨L⟩ will have no effect at all on the cylinder ⟨A1⟩, and ⟨K1⟩ and ⟨K2⟩ also will have no effect on the two cylinders ⟨GK1⟩ and ⟨GK2⟩ other than friction which is supposed to be trivial (if there is any friction at all).

But if we move all the nail holders in the opposite direction:

⟨L⟩ will turn the cylinder ⟨A1⟩, and ⟨K1⟩ and ⟨K2⟩ will turn the cylinders ⟨GK1⟩ and ⟨GK2⟩, and ⟨K⟩ will have no effect at all on the cylinder ⟨A1⟩, and ⟨L1⟩ and ⟨L2⟩ also will have no effect on the two cylinders ⟨GL1⟩ and ⟨GL2⟩ other than friction which is supposed to be trivial (if there is any friction at all).

The Mechanism of this Method

When the straight piece (B-C) is rotating counter-clockwise, and when it is in the first half period of its motion, we note that:

⟨K⟩ turns the end of cylinder ⟨A1⟩ which it touches (and which is far from the rotation axis of piece (B-C)) in its motion direction.

and that ⟨L1⟩ turns the end of the cylinder ⟨GL1⟩, which it touches, in its motion direction.

and that ⟨L2⟩ turns the end of the cylinder ⟨GL2⟩, which it touches, in its motion direction:

So these two cylinders (⟨GL1⟩ and ⟨GL2⟩) will turn the end relevant to the nail holder ⟨L⟩ (which is near the rotation axis of the piece (B-C)) in the opposite motion direction of that holder.

During this half period, ⟨L⟩ has no effect at all on ⟨A1⟩, and also ⟨K1⟩ and ⟨K2⟩ have no effect at all on ⟨GK1⟩ and ⟨GK2⟩ other than friction which is supposed to be trivial (if there is any friction at all).

Consequently the cylinder ⟨A1⟩ rotates counter - clockwise.

- In the second half period of the motion of the straight piece (B-C) (when it is rotating clockwise), we note that:

⟨L⟩ turns the end of the cylinder ⟨A1⟩, which it touches, in its motion direction.

And that ⟨K1⟩ turns the end of the cylinder ⟨GK1⟩, which it touches, in its motion direction.

And that ⟨K2⟩ turns the end of the cylinder ⟨GK2⟩, which it touches, in its motion direction.

So these two cylinders ⟨GK1⟩ and ⟨GK2⟩ turn the end revelant to the nail holder ⟨K⟩ in the opposite motion direction of that holder.

During this half period, ⟨K⟩ has no effect at all on ⟨A1⟩, and also ⟨L1⟩ and ⟨L2⟩ have no effect at all on ⟨GL1⟩ and ⟨GL2⟩ other than friction which is supposed to be trivial (if there is any friction at all).

17

Consequently the cylinder ⟨A1⟩ rotates counter-clockwise. So we have achieved the aim of this method, and figure (14) illustrates it.

\* This is the fourth method used for the exploitation of the rotatory sine motion (in general).

Therefore there are five important notes about this method, and I shall mention them now:

4-2) Important notes about this method

1. All (or some) of the important notes about the first method used for the exploitation of the rotatory sine motion are also important notes about this method after adapting them so that they become suitable for it.

2. According to the note (1) and the note (15) of the important notes about the first method used for he exploitation of the rotatory sine motion:

The cylinders ⟨G⟩ may be divided into three orbital areas, two of which have brake teeth, and the medical area has gearing teeth (or vice versa) and figure (15) illustrates this.

Of course they may be divided into more than three orbital areas. Of course the nail holders relevant to these cylinders must be prepared so that they will achieve the function needed, and so that the method will achieve the function needed.

3. Also according to the note (1) and note (15) of the important notes about the first method used for the exploitation of the rotatory sine motion:

The top and bottom bases of the cylinder ⟨A1⟩ may be divided into several orbital areas, some of which have brake teeth (in order to do their function as in note (2) in the important notes about the third method used for the exploitation of the rotatory sine motion), in addition to the areas that have gearing teeth to be suitable for the cylinders ⟨G⟩.

Of course the nail holders relevant to the cylinders ⟨G⟩ and to the bases of the cylinder ⟨A1⟩ must be prepared (concerning the inclination direction of the brake teeth and the measurements,etc.) so that they will do the function needed, and so that the method does the function needed (no figure).

4.According to the note (2) in the important notes about the first method used for the exploitation of the rotatory sine motion: The cylinders ⟨G⟩ can be on the external surface of the cylinder ⟨A1⟩, so that they can do the function needed.

Of course in this case, the external surface of the cylinder ⟨A1⟩, nail holders, and all of the elements of the method, must be prepared so that they can do the function needed (no figure).

Note:

I have mentioned the notes (2),(3), and (4) as examples to explain some cases of appling the note (1), although the note (1) alone is enough to express these notes, for this note (1) is available in the important notes about most technical descriptions.

5.These notes are essential parts of the technical description of this method.

\*\* These are the important notes about the fourth method used for the exploitation of the rotatory sine motion. So this method has been finished.

B - The methods used for the exploitation of the straight sine motion.

Introduction:

In the methods 2,3, and 4, and in figures (9) and (8) relevent to the first method used for the exploitation of the rotatory sine motion, we note that ,instead of brake nails, we have put brake nail holders together with their nails, so that their path will be a tangent of the surfaces or bases of the cylinders when their motion is straight sine.

Therefore:

5-1) The first method used for the exploitation of the straight sine motion

Is the same first method used for the exploitation of the rotatory sine motion, but instead of the brake nails, we put brake nail holders, and we consider that the motive force is the same brake nail holders, or we fix the nail holders on the new motive force (which is in a straight sine motion), or we transmit the motion of the new motive force to the nail holders.

Of course the positions of the brake nails and the brake teeth and the nature of the motion of the nail holders and all the elements of the method must be suitable so that they do the function needed.

For example: in figure (2), the brake teeth of the cylinder ⟨A1⟩ may be on the base of that cylinder, and when we move the two nail holders simultaneously in a straight sine motion, we get the aim of this method. (There are no figures relevant to this method review figures (1) to (10)).

\* This is the first method used for the exploitation of the straight sine motion (in general). Therefore we shall mention some important notes about it, which are three:

5-2) Important notes about this method:

1. The technical description of the First method used for the exploitation of the rotatory sine motion is complementery to the technical description of this method after adapting it so that it becomes suitable for it.
2. All (or some) of the important notes about the first method used for the exploitation of the rotatory sine motion are also important notes for this method after adapting them so that they become suitable for it.
3. These notes are essential parts of the technical discription of this method.
\*\* These are the important notes about this method. So this method has been finished.

6-1) The second method used for the exploitation of the straight sine motion

It is the same second method used for the exploitation of the rotatory sine motion, but here we consider that the motive force is the same nail holders, or we fix the nail holders on the new motive force (which is in a straight sine motion) or we transmit the motion of the new motive force to the nail holders.
Of course the possitions of the brake nails and brake teeth and the nature of the motion of the nail holders and all the elements of this method must be suitable so that they do the function needed.
For example: other than the illustrated in figure (11) the nail holder relevant to the cylinder ⟨BC1⟩ may have an effect on the end opposite to the end which is touched by this holder illustrated in that figure (of course in this case, the inclination direction of its brake nails will be opposite to the inclination direction illustrated in that figure)
or the positions of the two nail holders can be arranged so that the two cylinders ⟨BC1⟩ and ⟨A1⟩ are behind each other comparing to the two nail holders, other than the illustrated in that figure (beside each other comparing to the two nail holders).
Note: [in this last position, one nail holder at least may be used i.e.it will carry two kinds of brake nails, one of which is of inclination direction that is suitable for one of the two cylinders, and the second is of inclination direction that is suitable for the second cylinder].
When we move the two nail holders simultaneously (or the nail holder in the case of this note) in a straight sine motion, we get the aim of this method [no Figure, see Figure (11)].
\* This is the second method used For the exploitation of the straight sine motion (in general) therefore we shall mention some important notes about it, which are (three notes).

6-2) Important notes about this method

1. The technical description of the second method used for the exploitation of the rotatory sine motion together with its important notes are complementary of this method after adapting them so that they become suitable for it.
2. All (or some) of the important notes about the first method used for the exploitation of the rotatory sine motion are also important notes for this method after adapting them so that they become suitable for it.
3. These notes are essetential parts of the technical description of this method.
\*\* These are the important notes about this method. So this method has been finished.

7-1) The third method used for the exploitation of the straight sine motion

It is the same third method used for the exploitation of the rotatory sine motion, but here we consider that the motive force is the same nail holders, or we fix the nail holders on the new motive force (which is in a straight sine motion), or we transmit the motion of the new motive force to the nail holders.
Of course in this case, the positions of the brake teeth and brake nails and the nature of the motion of the nail holders and all elements of this method must be suitable so that they do the function needed (no figure. see figure (12) and (13)).
\* This is the third method used for the exploitation of the straight sine motion (in general). Therefore some important notes (which are three) must be mentioned.

7-2) Important notes about this method

1. The technical description of the third method used for the exploitation of the rotatory sine motion together with its important notes are complementary of this method after adapting them so that they become suitable for it.

2. All (or some) of the important notes about the first method used for the exploitation of the rotatory sine motion are also important notes for this method after adapting them so that they become suitable for it.

3. These notes are essetential parts of the technical description of this method.

** These are the important notes about this method. So this method has been finished.

8-1) The fourth method used for the exploitation of the straight sine motion

It is the same fourth method used for the exploitation of the rotatory sine motion, but here we consider that the motive force is the same nail holders, or we fix the nail holders on the new motive force (which is in a straight sine motion), or we transmit the motion of the new motive force to the nail holders.

Of course in this case, the positions of the brake teeth and brake nails and the nature of the motion of the nail holders and all elements of this method must be suitable so that they do the function needed (no figure See figures (14) and (42)).

* This is the fourth method used for the exploitation of the straight sine motion (in general). Therefore some important notes (which are three) must be mentioned.

8-2) Important notes about this method

1. The technical description of the fourth method used for the exploitation of the rotatory sine motion together with its important notes are complementary of this method after adapting them so that they become suitable for it.

2. All (or some) of the important notes abouut the first method used for the exploitation of the rotatory sine motion are also important notes for this method after adapting them so that they become suitable for it.

3. These notes are essetential parts of the technical description of this method.

** These are the important notes about this method. So this method has been finished.

Technical specifications of the applied example

Introduction: the applied example is the spanner mentioned in (the summery of the ivention subject and its applied example), which can be applied in several ways as an application of the methods used for the exploitation of the rotatory sine motion and can be also applied in several ways as an application of the methods used for the exploitation of the straight sine motion. I shall mention some of these ways.

A. as an application of the methods used for the exploitation of the rotatory sine motion.

9-1)The description of the spanner according to the first method used for the exploitation of the rotatory sine motion

This spanner consists of the following essential parts.

I) The body wanted to be moved:

A. The cylinder that plays the role of the body wanted to be moved: It replaces the cylinder ⟨A1⟩ in the first method used for the exploitation of the rotatory sine motion

```
    B. The connection of the thimble:
                                    } Which are extras relevant to the
    C. The thimble:                    specifications of the spanner.
```

II) Transmissions:

A. Several cylinders to play the role of a counter-direction transmission: These replace the cylinder ⟨B1⟩ in the first method used for the exploitation of the rotatory sine motion.

B. A holloww cylinder to replace the cylinder ⟨C1⟩ in the first method used for the exploitation of the rotatory sine motion.

III) The body that causes motion:

    A. The cover or the two covers.

    B. The cylinder of the frame work of the spanner.

(They replace the straight piece (B-C) in the first method used for the exploitation of the rotatory sine motion).

I- Description of the body wanted to be moved

    A. The cylinder that plays the role of the body wanted to be moved, and we shall call it the cylinder ⟨A⟩: Which is a solid cylinder with a cavity inside that is in the shape of a prism. And that prism is prepared so that the connection of the thimble can enter it at the two sides peropely in order to do its function.

- The external surface of that Cylinder has geering teeth. This Cylinder has two bases each of them has an external cirrcumference which is the cirrcumference of the cylinder and an internal cirrcumference which touches the edges of the prism.

- Between the internal cirrcumference and the external cirrcumference of the top base of the cylinder, there are two brake nails which are in a position that enable them to have a double effect (in one direction) if the suitable toothed wheel is available [if this toothed wheel is in a rotatory motion in a certain direction, it will turn that cylinder.But if it is in a rotatory motion in the opposite direction, it will has no effect on that cylinder other than the friction which must be trivial (if there is any friction at all), (this is of course: "The property of the brake toothed wheel and the brake nail")].

- And between the internal cirrcumference and the external cirrcumference of the bottom base of the cylinder, there are two brake nails which are in a position that enable them to have a double effect in one direction on the cylinder if the suitable brake toothed wheel is available, as they have the property of the brake toothed wheel and the brake nail.

- The positions of the nails on the bottom base of the cylinder and the nails of the top base must be arranged so that:

If the brake toothed wheel (which exchanges the effects with the nails of the top base) and the brake toothed wheel (which exchanges the effects with the nails of the bottom base) rotate simultaneously in one certain direction, they will simultaneously turn that cylinder. And if they move in the opposite direction, they will have no effect on it (other than friction if there is any friction at all).

    Figures (16)-(17) illustrate this cylinder.

    B. The connection of the thimble:

It is a solid body that connects the cylinder ⟨A⟩ with the thimble, (because it enters the cylinder from the two sides through the prism that is inside it, and as it can enter the thimble itself), so that it transmits the motion of this cylinder to the thimble. This connection can take several shapes.

    C. The thimble:

It is the solid body that transmits the motion of the cylinder ⟨A⟩ (to the nut or the screw etc. ) through the connection of the thimble and through properly putting it on the nut or screw. It must be in a shape that is suitable for the function needed. It can be in several shapes and several measurements that are suitable for the measurements of (the nuts or screws etc.)

II- Description of transmisions

    A. Several cylinders (let them be two for example) that play the role of a transmision in an opposite direction:

- It is preferred that they are similar, i.e. the diameters of their bases are equal and their heights are equal too....etc.

- The lateral surface of each cylinder has gearing teeth, that are apt to rotate and gear with the teeth of the lateral surface of the cylinder ⟨A⟩.

- A rotation axis passes through each cylinder so that the center of the cylinder and the centers of the top and bottom bases are points on this axis, and so that the axis is elongated at the two ends to enter the suitable place or it may not be elongated, according to the method of placement.

- I shall call these the cylinders ⟨B⟩.

    B: A holloww cylinder:

- Its internal surface has gearing teeth that are apt to rotate and gear with the gearing teeth of the cylinders ⟨B⟩.

- Its external surface has two brake nails which are placed so that they will have a double effect on that cylinder in (a certain direction) if there is a suitable brake toothed wheel as they will have the property of the brake toothed wheel and the brake nail.
- The internal redius of the base of this cylinder = [the external radius of the base of the cylinder ⟨A⟩ + the diameter of the base of one of the cylinders ⟨B⟩] with taking into consideration the measurements of gearing which must be suitable so that the gearing teeth will gear with one another, as will be mentioned in the mechanism of the spanner
- I shall call this the cylinder ⟨C⟩.
- Figures (18) - (19) illustrate this cylinder

III- Description of the motive body

It consist of the following;

A: The framework of the spanner:

It is a holloww cylinder which I shall call the cylinder ⟨D⟩, and which is mostly connected with the handle of the spanner.
- The internal surface of this cylinder has brake teeth so that they are suitable for the brake nails on the external surface of the cylinder ⟨C⟩.
- The radius of the base of this cylinder will be suitable so that the property of the brake toothed wheel and the brake nail will be available between the brake teeth on its internal surface and the nails on the external surface of the cylinder ⟨C⟩.

B: The two covers of the cylinders ⟨D⟩:
- The cover is mostly a hard and solid body. In the middle of this body, there is a hole which the connection of the thimble can enter to do the function needed without causing any negative effects.
- This cavity will be mostly a circle (the centre of which will be determined so that if we put the cover on the cylinder ⟨D⟩,its centre will be a point on the elongation of the rotation axis of the cylinder ⟨A⟩, and its redius will be equivalent to the redius of the circle which touches the edges of the prism which is inside the cylinder that plays the role of the moved body).
- This cover has brake teeth that suit to the brake nails on the base of the cylinder ⟨A⟩ which is opposite to the cover. These brake teeth are on the area (between the circumference of that cavity circle and the circumference of an imaginarty circle the center of which is the center of that cavity circle, and the radius of which is the radius of the base of the cylinder ⟨A⟩.

The Mechanism of The Spanner

1. Put the cylinder ⟨A⟩, the cylinder ⟨C⟩ and the cylinder ⟨D⟩ so that their vertical projections will be circle that have the same centre and that are in the same plane.
2. Put the cylinders ⟨B⟩ on the area between the external' surface of the cylinder ⟨A⟩ and the internal surface of the cylinder ⟨C⟩ so that they do their functions at their best. For example:

If the cylinders ⟨B⟩ are two, put them on the mentioned area so that they will be counter part to each other according to the rotation axis of the cylinder ⟨A⟩.

And so that the gearing teeth of the cylinder ⟨A⟩ are apt to rotate and gear with the gearing teeth of each cylinder of the cylinders ⟨B⟩.

Also the gearing teeth of the cylinder ⟨C⟩ must be apt to rotate and gear with each cylinder of the cylinders ⟨B⟩.
- Of course these cylinders ⟨B⟩ must be fixed so that they will be apt to rotate round their rotation axis only or round their rotation axis and round another rotation axis, but in a way that does not prevent them from doing their function needed.I shall discuss some methods of this fixation later on.
* Note:

The function needed of the cylinders ⟨B⟩ is that if we turn the cylinder ⟨C⟩ in a certain direction, the cylinder ⟨A⟩ will rotate in the opposite direction, but if we turn the cylinder ⟨A⟩, in a certain direction, it is not nessecery that the cylinder ⟨C⟩ will rotate in the opposite direction, for there is no ojection that it will rotate with it in its rotation direction.

3. Put the two covers of the cylinder ⟨D⟩ so that the toothed face of each cover will be opposite to the brake nails on the base of the cylinder ⟨A⟩ which it faces.
* Note:

The inclination directions of the brake teeth on the two covers and on the internal surface of the cylinder ⟨D⟩ must be so that:

22

- If the cylinder ⟨D⟩ and the two covers are in a rotatory motion in a certain direction, the cylinder ⟨C⟩ will move in the rotation direction of the cylinder ⟨D⟩, and the two covers will have no effect on the cylinder ⟨A⟩ other than friction which must be trivial (if there is any friction at all).

- And if the cylinder ⟨D⟩ and the two covers are in a rotatory motion in the opposite direction, the cylinder ⟨A⟩ will rotate in the rotation direction of the cylinder ⟨D⟩ and the two covers, and the cylinder ⟨D⟩ will have no effect on the cylinder ⟨C⟩ other than friction which must be trivial (if there is any friction at all).

4. We shall tye the two covers to the framwork of the spanner so that they do their function needed. I shall discuss some methods concerning this later on.

Now we note the following:

- When we move the handle of the spanner, and consequently the cylinder ⟨D⟩, in a certain direction, clockwise for example, the cylinder ⟨A⟩ will move clockwise, as a reasult of the brake teeth on the two covers and the brake nails on the two bases of that cylinder, and the brake teeth on the internal surface of the cylinder ⟨D⟩ will have no effect on the cylinder ⟨C⟩ other than friction which must be trivial (if there is any friction at all).

- And when we move the handle of the spanner, and consequently the cylinder ⟨D⟩ counter-clockwise, the cylinder ⟨A⟩ will move clockwise because the cylinder ⟨D⟩ moves the cylinder ⟨C⟩ counter-clockwise and consequently this cylinder moves the cylinder ⟨A⟩ clockwise, as a reasult of the cylinders ⟨B⟩ which plays the role of a transmission in an opposite direction.

Figures (20)-(21) illustrates this mechanism of the spanner.

Therefore:

- If you want to bind(a nut or screw etc.), put the spanner on the nut properly (the suitable thimble and the suitable thimble connection) and by means of moving the spanner in the two direction, the nut will be bound.

- And if you want to unbind that (nut or screw... etc), you are only to reverse the spanner i.e.to make the projection of the connection gets out of the other side. And by moving the spanner in the two directions (after properly putting the spanner on the nut ) the nut is unbound.

- This is the mechanism of the spanner in general (without explaining the tying of the cover or the fixation of the cylinders ⟨B⟩).

- Now I shall discuss that tying and that fixation.


The tying of The Cover


Introduction:

- in order to do its function needed, the cover must be tied to the cylinder ⟨D⟩ (or to the framwork of the spanner) on one of the following two conditions.

The first condition: the cover must be tied to the cylinder ⟨D⟩ so that if the cylinder ⟨D⟩ rotates in a certain direction, the cover will rotate in the same direction, and if it rotates in the opposite direction, it will also rotate in its same rotation direction.

The second condition: the cover must be tied to the cylinder ⟨D⟩ so that if the cylinder ⟨D⟩ rotates in a certain direction, the cover will rotate in the same direction. but if it rotates in the opposite direction, it will not necessarily rotate with it. However the direction in which the cover will rotate must be the direction in which the cover turns the cylinder ⟨A⟩.

Of course the cover may be tied to the cylinder ⟨D⟩ on one of those two conditions in different methods.

- I shall mention some of these methods (a method for each condition).


1. A method to tie the cover to the cylinder ⟨D⟩ on the first condition. To apply this method:


A: - The base of the cover must be in the shape of polygon (i.e. the cover will be in the shape of a prism). The height of this prism is the thickness of the cover.

The lateral surface of the cover (i.e. the lateral sides of the prism) must have projections so that each projection will be vertical to the side on which it is installed. Under each projection we shall put a spring to allow it to enter the inside of the cover, and the projection will be unable to get out of the side on which it is installed. Figure (22) illustrates this cover.

B: - As for the cylinder ⟨D⟩, it will be as follows:

1- Its height (at least) = [the height of the cylinder ⟨C⟩ + the height of the first cover + the height of the second cover].

2- Its internal surface will be divided into several orbital areas as follows: (considering that the height of the cylinder ⟨D⟩ is the height I have mentioned, and considering that the height of the cylinder ⟨C⟩ = the height of the cylinder ⟨A⟩, and also considering that the two covers are similar):

2-a: The area (d-1) [(which is an orbital area on its internal surface, and the height of which = the height of the cover, beginning from the top base of that cylinder and going downwards).This area is relevant to the cover as it is in the shape of the prism that surrounds the cover. On this area there will be holes that are piercing into the external surface of the cylinder ⟨D⟩].

The projections on the lateral surface of the cover will be placed in these holes.

2-b: The area (d-2) (which is an orbital area on its internal surface, and the height of which = the height of the cylinder ⟨C⟩, beginning from the end of the previous area and going downwards). This area is relevant to the cylinder ⟨C⟩,i.e. it is the area that has brake teeth to suit to the brake nails on the cylinder ⟨C⟩.

2-c: The area (d-3) [which is an orbital area on its internal surface, and the height of which = the height of the cover, beginning from the bottom base of the cylinder ⟨D⟩ and going upwards] this area is relevant to the second cover and is similar to the area (d-1).

3- It is preferred that there will be orbital projections to separate those areas, and the whole area (d-2) can be an orbital projecting area to meet that function.

In other words, the cylinder ⟨D⟩. will be a set of three cylinders (of different internal diameters). These cylinders will be on one another. Figure (23) illustrates that cylinder.

C: - The circumference of the cover and the circumference of the cylinder ⟨D⟩ must be arranged so that the cover will properly enter its relevant place.

- Of course all the measurements of the elements of the spanner must meet the function of this method (and also the function of the spanner).

Now:

- To tie the cover, we shall put it in its relevant place on the cylinder ⟨D⟩, and we shall put the projections on the cover in their relevant places.

In order to remove the cover, we shall push projections into the inside (by means of a suitable tool through the holes on the external surface of the cylinder ⟨D⟩), and then we remove the cover.

## 2. A method of tying the cover to the cylinder ⟨D⟩ on the second condition.

To apply this method:

A: - The cover must take the shape of a holoww cylinder, the height of which is the thickness of the cover, and the lateral surface of the cover must have two brake nails .Figure (24) illustrates this cover.

B: - As for the cylinder ⟨D⟩, it will be as follows:

1: Its height = [at least the height of the cylinder ⟨C⟩ + the height of the first cover + the height of the second cover].

2: Its internal surface will be divided into several orbital areas as follows:

(considering that the height of the cylinder ⟨D⟩ is the height I have mentioned and considering that the height of the cylinder ⟨C⟩ = the height of the cylinder ⟨A⟩, and also considering that the two covers are similar):

2-a: The area (d-1) (which is an orbital area on its internal surface, and the height of which = the height of the cover, beginning from the top base of that cylinder and going downwards).

This area is relevant to the cover as it has brake teeth that suit to the brake nails on the lateral surface of the cover.

2-b: The area (d-2) [(which is an orbital area on its internal surface, and the height of which = the height of the cylinder ⟨C⟩, beginning from the end of the previous area and going downwards)].

This area is relevant to the cylinder ⟨C⟩,i.e. it is the area that has brake teeth to suit to the brake nails on the cylinder ⟨C⟩.

* Note:
- The inclination direction of the brake teeth on the area (d-2) are opposite to the inclination direction of the brake teeth on the area (d-1) and the area (d-3).

2-c: The area (d-3) [which is an orbital area on its internal surface, and the height of which = the height of the cover, beginning from the bottom base of that cylinder, and going upwards]. This area is relevant to the second cover and is exactly similar to the area (d-1).

- It is preferred that there will be orbital projections to separate those areas, and the whole area (d-2) can be an orbital projecting area to meet that function.

24

- In other words, the cylinder ⟨D⟩ will be a set of three cylinders (of different internal diameters). These cylinders will be on one another. Figure (25) illustrates this cylinder.

C: The circumference of the cover and the circumference of the cylinder ⟨D⟩ must be arranged so that the cover will properly enter its relevant place. All the measurements of the elements of the spanner must meet the function of this method (and also the function of the spanner).

D: The place of the connection of the thimble on the cylinder ⟨A⟩ can be elongated so that it will be outside the cover. In this case we shall arrange a place of an elastic ring on it so that it will prevent the cover from getting out. Figure (26) illustrates this.

Now:

To tie the cover, we shall put it in its relevent place on the cylinder ⟨D⟩, and we shall properly put the eleastic ring, in order to prevent the cover from going out. In order to remove the cover, we shall remove the elastic ring and then take the cover out.

    * Note: of course in the method of tying according to the first condition we can use the way of the elastic ring instead of the projectinos on the lateral surface on the cover.

The fixation of the cylinders ⟨B⟩

Introduction:

When I say the (fixation of the cylinders ⟨B⟩), I mean how to make the cylinders ⟨B⟩ apt to rotate round only its rotation axis (which passes through its center) or apt to rotate both round its rotation axis and another rotation axis on condition that this rotation and its direction will cause no negative effects on the function needed of the cylinders ⟨B⟩ and the spanner.

- That briefly means making the cylinders ⟨B⟩ do their functions needed.
- According to the note (relevant to the fixation of the cylinders ⟨B⟩) mentioned in the mechanism of the spanner:
- What we are intersted in is that we shall fix the cylinders ⟨B⟩ in the half period during which the (cylinder ⟨D⟩) turns (the cylinder ⟨C⟩).
- Therefore I shall discuss that fixation only in this half period, because there is no need to explain the second half period (but of course on condition that the second half period will not damage the fixation which was done during the first half period of the motion).
- There are different methods to arrange that fixation. And I shall mention five methods.

1- The first method used for the fixation of the cylinders ⟨B⟩

- In this method we shall fix the cylinders on both covers.

We can do this when we make a suitable places for the cylinders ⟨B⟩ on the enternal side of each cover, [Figure (27) illustrates these places]. We shall put those cylinders on thiere places in a suitable way.

And we shall tie the cover to the cylinder ⟨D⟩ on the second condition.

And we shall prevent the aptitude of the cover to rotate (at least easily) in the opposite direction to the supposed rotation direction of the cylinder ⟨A⟩.

This can be done by means of different ways. By following the simplest way, we can make another handle of the spanner, so that this handle wil be attatched to the two covers, so that this attatechment will be based upon the second condition, and the direction in which this handle will turn the two covers will be the same direction in which the handle of the framework of the spanner will turn the two covers.

Now we note that:

When we move those handles (the handle of the framework of the spanner and the handle used for the fixation of the two covers)in a motion that is like the motion of the manual scissors (or when we move the handle of ⟨D⟩ and fix the handle of the cover), we achive the aim of this method (no figure).

Important note:

All measurements, number, the shapes of all essential elements of the spanner, the new elements used in this method, and the measurements of the elements of the teeth must be arranged so that the spanner will do its function needed, and so that we can achive the purpose of this method.

2- The second method used for the fixation of the cylinders ⟨B⟩

- In this method, we shall use one cover as a motive body. As for the second cover, it will be used to fix the cylinders ⟨B⟩ i.e it has not to carry brake teeth (and also no need for the brake nails on the base of the cylinder ⟨A⟩ which is opposite to it), and this cover will take the shape of a cylinder (which is haloww of course).

Its lateral surface will have gearing teeth and will have on its internal surface places for the cylinders ⟨B⟩.

- We need several cylinders (two for example), and they are preferred to be similar, and the lateral surface of each cylinder will have gearing teeth that are apt to rotate and gear with the gearing teeth of that cover in order to play the role of (a body that absorbs motion),and we shall call them the cylinders ⟨F⟩.

There will be an area on the internal surface of the cylinder ⟨D⟩ which is relevant to that cover(let it be the area (d-1). This area will have gearing teeth that are apt to rotate and gear with the gearing teeth of the cylinders ⟨F⟩. (Figure 28).

- Then we shall put the cover in its place and properly put the cylinders ⟨F⟩ between the lateral surface of the cover and the area (d-1) so that the gearing teeth on the area (d-1) will be apt to rotate and gear with the gearing teeth of the cylinders ⟨F⟩. Also the gearing teeth of the cylinders ⟨F⟩ will be apt to rotate and gear with the gearing teeth on the lateral surface of the cover.

- Each of the cylinders ⟨F⟩ will be free to rotate both round its rotation axis which (pases through its center) and round the rotation axis of the cover..

- Of course we shall fix the end of each cylinders ⟨B⟩ in its suitable place on the internal surface of that cover.

- Each base of this cover is preferred to be elongated by a solid orbital projecting area. The elongation direction of this area will be from the center of that base towards the lateral surface of the cover and will be vertical to the rotation axis of the cover,without causing many negative effects on the motion of the spanner, so that these two projections will be a channel for the cylinders ⟨F⟩.

- Now: after applying all element of the spanner, we note that when we move ⟨D⟩ (in the direction which I consider discussing), the cover which have cylinders ⟨B⟩ fixed on it, will not rotate in the rotation direction of ⟨D⟩. So we have done the required fixation.

  * Note 1:
    - It is preferred that there will be a holoww ring on which we shall fix the other end of the cylinders ⟨B⟩. This ring will have suitable places for the cylinders ⟨B⟩ (without causing any negative effects on the motion of the spanner).

      And we can fix this ring on the cover (which carries the cylinders ⟨B⟩) by means of posts.The length of these posts will be arranged so that the cylinders ⟨B⟩ can be properly fixed between the cover and that ring on the suitable places.

      Figure (29) illustrates this method

  * Note 2:
    - As for the cover which plays the role of motive body, we can tie it to the cylinder ⟨D⟩ on the first or second condition.

  * Note 3:
    - All measurements, number, the shapes of all essential elements of the spanner, the new elements used in this method, and the measurements of the elements of the teeth must be arranged so that the spanner will do its function needed, and so that we can achieve the purpose of this method.

### 3- The third method used for the fixation of cylinders ⟨B⟩

It is the spanner (on which we apply the second method used for the fixation of cylinders ⟨B⟩).

- But in this method, we shall fix the cylinders ⟨B⟩ on the cylinders ⟨F⟩ instead of the cover.

- We can do this if we fix each cylinder ⟨B⟩ and each cylinder ⟨F⟩ on a solid piece that carries suitable places for those cylinders..

- The measurements of that piece and the distance between each two places of the cylinders will be arranged so that they do their function needed.

- Figure (30) illustrates this method.

  * Note 1:
    - In this method, we can do without the (cover which carries the cylinders ⟨B⟩.
    - When we do without it, it is preferred that we shall use a holoww ring which has a suitable place for the other end of each cylinder ⟨F⟩ in order to fix (carry) the cylinders ⟨F⟩. And the measurements of this ring will be arranged so that it will cause no negative effects on the motion of the spanner in general, and so that it does its function needed. Figure (31) illustrates this ring.

- Of course: by doing without that cover, we mean doing without its function as a carrier of the cylinders ⟨B⟩.
  * Note 2:
  All measurements, number, the shapes of all essential elements of the spanner, the new elements used in this method, and the measurements of the elements of the teeth must be arranged so that the spanner will do its function needed, and so that we can achieve the purpose of this method.

4 - The fourth method used for the fixation of the cylinders ⟨B⟩

- In this method both of the covers can be tied to the cylinder ⟨D⟩ according to the first condition or the second condition as the fixation will not depened on any of the two covers.
- In this method we need the following:
  A: - Two cylinders to play the role of the carrier of the cylinder ⟨B⟩, and we shall call them the cylinders ⟨E⟩. And each cylinder will be holoww (so that the cylinder ⟨A⟩ can enter it and get out of it).
  On the bases of those cylinders, there will be suitable places for the cylinders ⟨B⟩, and the lateral surface of each cylinder will have gearing teeth.
  B: - A proper number of cylinders ( which are preferred to be similar). The lateral surface of each one of these cylinders will have gearing teeth that are apt to rotate and gear with the gearing teeth of the cylinder ⟨E⟩, (considering that the two cylinder ⟨E⟩ are exactly similar. These cylinders (absorb motion), and i.e.we can call them cylinders ⟨F⟩.
    * Note:
    Each base of each cylinder ⟨E⟩ is preferred to be elongated by a solid orbital projecting area so that each two projecting areas on the cylinder ⟨E⟩ will be a channel for the cylinders ⟨F⟩. But this projecting area must not cause any negative effects on the motion of the spanner.
  C: - As for the cylinder ⟨D⟩, it will be as follows:
    1 - Its height [(at least) = the height of hte cylinder ⟨C⟩ + the height of the first cylinder ⟨E⟩ + the height of the second cylinder ⟨E⟩ (considering that the height of ⟨E⟩ = the height of ⟨F⟩) + the height of the first cover + the height of the second cover].
    2 - Its internal surface will be divided into several orbital areas as follows: (considering that its height = the height I have mentioned, and considering that the two cylinders ⟨E⟩ are similar and that the two covers are similar, and also considering that the height of the cylinder ⟨C⟩ = the height of ⟨A⟩).
    2-a: The area (d-1) [(which is an orbital area on its internal surface, and the height of which = the height of the cover, beginning from the top base of that cylinder and going downwards)]. This area is relevant to the cover.
    2-b: The area (d-2) [(which is an orbital area on its internal surface, and the height of which = the height of the cylinder ⟨F⟩, beginning from the end of the previous area and going downwards)].
    This area is relevant to the cylinder ⟨F⟩, as this area has gearing teeth that are apt to rotate and gear with the gearing teeth of the cylinder ⟨F⟩.
    2-c: The area (d-3) [which is an orbital area on its internal surface, and the height of which = the height of the cylinder ⟨C⟩, beginning from the end of the previous area and going downwards].
    This area is relevant to the cylinder ⟨C⟩,i.e. it has brake teeth.
    2-d: The area (d-4) [which is an orbital area on its internal surface, and the height of which = the height of the cylinder ⟨F⟩, beginning from the end of the previous area and going downwards].
    This area will be exactly similar to the area (d-2).
    2-e: The area (d-5) [which is an orbital area on its internal surface, and the height of which = the height of the cover, beginning from the end of the previous area and going downwards]. This area will be exactly similar to the area (d-1).
- It is preferred that there will be orbital projections to separate the five areas. The same areas can do this function.
  Figure (32) illustrates that cylinder.
  Now:
We shall put each part of the spanner in its suitable position.
  As for the cylinders ⟨E⟩ and ⟨F⟩, their positions will be as follows:
We shall put the cylinders ⟨E⟩ in their suitable places,and we shall put some cylinders ⟨F⟩ between the area (d-2) and the cylinder ⟨E⟩ (which is opposite to the area (d-2)). We shall put these cylinders in a suitable way so that the gearing teeth on the area (d-2) will be apt to rotate and gear with the gearing teeth of the cylinder ⟨F⟩ and also the gearing teeth of the cylinder ⟨F⟩ will be apt to rotate and gear with the gearing teeth of the cylinder ⟨E⟩.

- In the same way. we shall also put the other cylinders ⟨F⟩ between the area (d-4) and the cylinder ⟨E⟩ which is opposite to the area (d-4).
- And of course we shall fix the cylinders ⟨B⟩ on the suitable places on the bases of the cylinders ⟨E⟩.
   The mechanism of that fixation:

Introduction: if the cylinders ⟨E⟩ remain still during the movements of the spanner, this means that the cylinders ⟨B⟩ will be still too.
   Now:

When the cylinder ⟨D⟩ is in a rotatory motion in the direction (which I am studying), the cylinder ⟨E⟩ will be still (will not rotate), because the cylinders ⟨F⟩ are free to rotate round the rotation axis of the cylinder ⟨E⟩.

- And the cylinder ⟨E⟩ will not be able to rotate in the rotation direction of the cylinder ⟨D⟩ becuse of the cylinders ⟨F⟩.
- i.e. the cylinders ⟨B⟩ will not be able to rotate round the rotation axis of the cylinder ⟨A⟩ in the rotation direction of the cylinder ⟨C⟩.
- And originally the cylinders ⟨B⟩ are not to be prevented from rotating (round the rotation axis of the cylinder ⟨A⟩) in the opposite direction of the rotation direction of the cylinder ⟨C⟩ (on especial conditions).
- So we have fixed the cylinders ⟨B⟩.
   Figure (33) illustrates this method.
* Note:
   All measurements, number, the shapes of all essential elements of the spanner, the new elements used in this method, and the measurements of the elements of the teeth must be arranged so that the spanner will do its function needed, and so that we can achieve the purpose of this method.

### 5 - The fifth method used for the fixation of the cylinders ⟨B⟩

- It is the spanner (on which we apply the fourth method used for the fixation of the cylinders ⟨B⟩).
- But in this method, we shall fix the cylinders ⟨B⟩, on the cylinders ⟨F⟩ instead of the cylinders ⟨E⟩.
   We can do this if we do the following:
- We shall fix an end of a cylinder ⟨B⟩ and an end of a cylinder ⟨F⟩ on a solid piece, and we shall fix the other end of the same cylinder ⟨B⟩ and an end of a cylinder ⟨F⟩ (which is counterpart to the previous ⟨F⟩) on another solid piece.
- And the measurements of those solid pieces and the distance between the places on each piece must be arranged so that they do theire function needed.
   Figure (34) illustrates this method.
   Note 1:

In this method, we can do without the two cylinders ⟨E⟩.
   And when we do without them, it is preferred that we shall use two hollow rings so that the cylinders ⟨F⟩ can be placed and fixed in proper positions on these rings.
- and the measurements of the rings will be arranged so that they will cause no negative effects on the motion of the spanner in general, and so that they will do their function needed. (Figure (35) illustrates these rings).
   Note 2:

All measurements, number, the shapes of all essntial elements of the spanner, the new elements used in this method, and the measurements of the elements of the teeth must be arranged so that the spanner will do its function needed, and so that we can achieve the purpose of this method.

* That was the technical description of the spanner according to the first method used for the exploitation of the rotatory sine motion (in general) therefore we must mention some important notes about this description,(which are 16 notes).

### 9-2) Important notes about the spanner according to this method

1 - The brake nails on the two bases of the cylinder ⟨A⟩ can be on the lateral surface of that cylinder as illustrated in figure (36). In this case the brake teeth on the cover must be on the internal surface of the circular cavity in the cover so that they will suit to those nails.

- Breiefly, the note (1) in the important notes about the first method used for the exploitation of the rotatory sine motion can be applied on the technical description of the applied example in a way suits to it.

2 - The connection of the thimble can be a projection that gets out of bouth sides of the cylinder ⟨A⟩ which plays the role of the moved body. In this case, that cylinder will not have a cavity in the shape of a prism.

3 - The thimble and the connection of the thimble used in the ordinary ratchet spanner can be used for this spanner too.

4 - It is not necessary that the brake teeth will be motive bodies and the brake nails moving bodies as a reasult of the effect of those teeth. The brake teeth can be moving bodies and the brake nail can be motive bodies.

5 - This spanner is a (double ratchet-spanner) but we can make it an ordinary rachet-spanner and a double rachet-spanner at the same time. This can be done when we make it possible to cancel the property of (the brake teeth and the brake nail) between the [brake teeth on the internal surface of the cylinder ⟨D⟩, and the brake nails on the external surface of the cylinder ⟨C⟩ when we want this, (or we can cancel that property between the brake teeth on the cover and the brake nails on the cylinder ⟨A⟩. But the first way is better)]. We can do this by using the brake nail of external control (of course that kind of nails is well-known, as it is used in the ordinary ratchet- spanner that has a control-nail).

There are different methods to apply this, one of which is the following one:

- According to the note (4), the external surface of the cylinder ⟨C⟩ can have brake teeth, and the area on the internal surface of the cylinder ⟨D⟩ (which is relevant to the cylinder ⟨C⟩) can have brake nails instead of brake teeth And then we use the brake nail of external control, and make its control buttom on the external surface of the cylinder ⟨D⟩.

- So if we want that spanner to be a double ratchet-spanner, we shall set that nail in the suitable possition to exchange the effects with the brake teeth on the external surface of the cylinder ⟨C⟩.

And if we want it to be an ordinary ratchet-spanner, we shall set that nail in the suitable possition so that it does not exchange the effects with those brake teeth.

6 - We can achieve the aim mentioned in the note ⟨5⟩ by means of other methods. But this does not mean that we have invented a different spanner.

7 - We note that when we wnat to change the binding possition of the spanner into the unbinding possition (or vice versa), we must reverse the spanner i.e we must make the connection of the thimble gets out of the other side of the cylinder ⟨A⟩.

But there are other methods through which we can change the binding possition of the spanner into the unbinding possition (or vice versa) for example: by reversing the property of the brake teeth and the brake nails, as we find in some ordinary ratchet-spanner.

8 - In the internal surface of the cylinder ⟨D⟩, there is an area for the cover. I have mentioned this because I have considered that the cover enters that cylinders in case of fixation. But this does not mean that the area is necessary because we can cancel it if we do not need it.

9 - In some methods used for the fixation of the cylinders ⟨B⟩,we note that the cover is to do two functions:

* - It carries the cylinders ⟨B⟩.
* - It is a motive body (of course these are addetional functions beside its function as a cover).
- Of course we can use different cylinders to do one of the functions of the cover.

10 - In the first method used for the fixation of the cylinders ⟨B⟩, they can be carried on one cover instead of the two covers.

11 - We can tie the cover to the cylinder ⟨D⟩ by means of methods other than the ones I mentioned, but this does not mean that we invented a new spanner.

12 - We can fix the cylinders ⟨B⟩ by means of methods other than the ones I mentioned, but this does not mean that we invented a new spanner.

13 - The number of brake nails, the inclination direction of the brake teeth, the measurements of the elements of the teeth and the toothed wheels, the measurements and number and shpes of all elements of the spanner, the elements of the motion in general, the elements of force in general, and durability and productivity must be arranged so that the spanner will do the function needed, and it is preferred that this will be done in the best way. These points will be considered and studied by the manufacturer.

For example: (the cylinder ⟨A⟩ can have one nail or six nails instead of four, and for example we can use three cylinders ⟨B⟩ instead of two, etc.)

14 - The shape of the spanner and its beauty will be considered and studied by the manufacturer.

15 - All (or some) of the important notes about the first method used for the exploitation of the rotatory sine motion are also important notes about the technical description of the spanner (according to this method) in a way that suits to it.

16 - These important notes are essential parts of the technical description of the spanner (according to this method).

** These are the important notes about the spanner according to this method. So the description of the spanner according to this method has been finished.

10 - The spanner according to the paragraph (A) in the note (2) in the important notes about the first method used for the exploitation of the rotatory sine motion

The spanner can be applied according to figures (7) and (8), and I shall explain both cases.

I.) - The first case [according to figure (7)]:

The spanner can be applied according to figure (7) by means of three probabilities.

10-1) Description of the spanner according to the first probabilities in the first case in the paragraph (A).

Here we consider that the moved body is the cylinder ⟨A1⟩ which is holoww so that the connection of the thimble can enter it through any of its sides in order to do its function needed (i.e we shall consider that the cylinder ⟨A⟩ is the cylinder ⟨A1⟩).

- Also we shall consider that the cylinder ⟨B1⟩ and ⟨C1⟩ are transmissions i.e we shall consider that the cylinder ⟨C⟩ is the cylinder ⟨C1⟩ (of course it must be hollow so that the connection of the thimble can enter that cavity and rotate in it freely), and the cylinders ⟨B⟩ are a set of cylinder ⟨B1⟩.
- And the positions of the brake teeth and brake nails will be arranged so that the spanner will do its function needed i.e. for example:
- If the brake nails are on the top base of the cylinder ⟨A⟩, the brake teeth may be on the cover.
- and if they are on its lateral surface, the brake teeth may be on the cylinder ⟨D⟩ properly. (no relevant figure see figure (7)).

10-2) Important notes about the spanner according to this probability.

1 - The technical description of the spanner (according to the first method used for the exploitation of the rotatory sine motion) is complementary of the technical description of the spanner (according to this probability) in a way that suits to it.

2 - All (or some) of the important notes about the technical description of the spanner (according to the first method used for the exploitation of the rotatory sine motion) are also important notes about the technical description of the spanner (according to this probability) in a way that suits to it.

3 - These important notes are essential parts of the technical description of the spanner (according to this probability).

4 - I consider that the spanner (according to this probability) is one of the important notes about the spanner (according to the first method used for the exploitation of the rotatory sine motion).

10-3) Description of the spanner according to the second probability in the first case in the paragraph (A)

Here we shall consider that the cylinder ⟨B1⟩ is the moved body on the same principle of the second probability in the description of the spanner (according to the paragraph (B) in the note (2) in the important notes about the first method used for the exploitation of the rotatory sine motion)which will be mentioned later on.

10-4) Important notes about the spanner according to this probability

1- The technical description of the spanner (according to the second probability in the paragraph (B) in the note (2) in the important notes about the first method used for the exploitation of the rotatory sine motion) is complementary of the technical description of the spanner (according to this probability) in away that suits to it.

2- All (or some) of the important notes about the technical description of the spanner (according to the first method used for the exploitation of the rotatory sine motion)are also important notes about the technical description of the spanner (according to this probability) in away that suits to it.

3- These important notes are essential parts of the technical description of the spanner (according to this probability).

4- I consider that the spanner (according to this probability) is one of the important notes about the spanner (according to the first method used for the exploitation of the rotatory sine motion).

## 10-5) Description of the spanner according to the third probability in the first case in the paragraph (A)

- Here we shall consider that both of the two cylinders ⟨A1⟩ and ⟨C1⟩ do the function of the cylinder ⟨C⟩, and we shall call them the cylinders ⟨C1⟩ and ⟨C2⟩, and each one of them will be hollow so that the connections of the thimble can enter that cavity and rotate in it freely.
- And we shall consider that the base of the cylinder ⟨B⟩ (which is ⟨B1⟩) and which faces the rotation axis of the two cylinders ⟨C1⟩ and ⟨C2⟩, will have orbital gearing teeth figure (37) (in addition to the original gearing teeth on its external surface).
- Although we shall consider that the moved body is another cylinder and we shall call it ⟨A⟩.

It must be prepared so that the connection of the thimble can enter it at the two sides peropely in order to do its function its external surface has gearing teeth that are apt to rotate and gear with the gearing teeth of the mentioned base of the cylinder ⟨B⟩.
- And the cylinder ⟨D⟩ must be so that:

If it rotates in a certain direction, one of the two cylinders ⟨C1⟩ or ⟨C2⟩, (let it be ⟨C1⟩ for example) will rotate in the rotation direction of ⟨D⟩, and it will have no effect on ⟨C2⟩ other than friction which must be trivial (if there is any friction at all).

And if it rotates in the opposite direction, the cylinder ⟨C2⟩ will rotate in the rotation direction of ⟨D⟩, and it will have no effect on ⟨C1⟩ other than friction which must be trivial (if there is any friction at all).

We depend for this on the property of the brake nails and the brake teeth, where the cylinders ⟨C1⟩, ⟨C2⟩, and ⟨D⟩ must be prepared for this.

That is too possible as we had seen in the previous technical descriptions, for example:
- Each one of the two cylinders ⟨C1⟩ and ⟨C2⟩ Can have two brake nails on its external surface.
- And the cylinder ⟨D⟩ Can be as follows:

1- The height of it (at least) = [the height of the cylinder ⟨C1⟩ + the height of the cylinder ⟨A⟩ - (considering that the height of ⟨A⟩ at least = the diameter of the base of one of the cylinders ⟨B⟩) + the height of the cylinder ⟨C2⟩].

2- The internal surface of this cylinder will be divided into several orbital areas as follows:

[considering that the height of it, is the height I have mentioned, and considering that the height of ⟨C1⟩ = the height of ⟨C2⟩, and the height of ⟨A⟩ is the height I have mentioned].

2-a: The area (d-1) [(which is an orbital area on its internal surface, and the height of which = the height of ⟨C1⟩, beginning from the top base of ⟨D⟩ and going down wards)]. This area is relevant to the cylinder ⟨C1⟩, i.e. it has brake teeth to exchange the effect with the brake nails of ⟨C1⟩.

2-b: The area (d-2) [(which is an orbital area on its internal surface, and the height of which = the height of ⟨A⟩, beginning from the end of the previous area and going down wards)]. This area is a solid area and it must not cause any negative effect on the function needed of ⟨B⟩.

2-c: The area (d-3) [which is an orbital area on its internal surface, and the height of which = the height of ⟨C2⟩ beginning from the previous area and going down wards].

This area is relevant to the cylinder ⟨C2⟩, i.e. it has brake teeth.
- And the inclination directions of the brake teeth and the brake nails must be so that the cylinders ⟨C1⟩, ⟨C2⟩, and ⟨D⟩ do the function needed.
- No need for the two covers as motive bodies (mentioned in the first description of the spanner), nor for that the cylinder ⟨A⟩ having brake nails.

Because the two cylinders ⟨C1⟩, and ⟨C2⟩ are doing the functions of the two covers and the cylinder ⟨C⟩, at one time.
- And we can use the way of the elastic ring to prevent the two cylinders ⟨C1⟩ and ⟨C2⟩ from getting out.

The mechanism of this spanner will be as follows:
- The cylinders ⟨C1⟩, ⟨C2⟩, and ⟨B⟩ will be as in figure (7), and the cylinder ⟨A⟩ will be between the two cylinders ⟨C1⟩ and ⟨C2⟩, so that its gearing teeth will be apt to rotate and gear with the gearing teeth of the mentioned bases of the cylinders ⟨B⟩, and so that the connection of the thimble can enter it through the two sides in order to do its function needed...

31

- Now we note that:
- in the first half period of the motion of the spanner, the cylinder ⟨D⟩ rotates clockwise (for examle). Consequently the cylinder ⟨C1⟩ will rotate clockwise, as a reasult of the barke teeth on the area (d-1) and the brake nails on the cylinder ⟨C1⟩.
Consequently the cylinder ⟨A⟩ will roteate clockwise, as a reasult of the motion of cylinders ⟨B⟩.
- And in the second half period, the cylinder ⟨D⟩ rotates counter-clockwise.
Consequently the cylinder ⟨C2⟩ will rotate counter-clockwise, as a reasult of the brake teeth and the brake nails.
Consequently the cylinder ⟨A⟩ will rotate clockwise, as a reasult of the motion of cylinders ⟨B⟩.
So we have achived the aim of this spanner, figure (38) illustrates this propability.

10-6) Important notes about the spanner according to this probability

1- Of course it is possible for one of the two cylinders ⟨C1⟩ or ⟨C2⟩ to do also the function of (the cover as a motive body mentioned in the first description of the spanner), that when it has brake teeth in the suitable place, and when the cylinder ⟨A⟩ has brake nails in the suitable place.
In this case, this previous technical description will be the same (first technical description of the spanner). But having a different method for the fixation of the cylinders ⟨B⟩, with some difference for the elements of the spanner to suit this method, as we note that the possitions of the cylinders ⟨C⟩ and ⟨B⟩ are different.
2- The technical description of the spanner (according to the first method used for the exploitation of the rotatory sine motion) is complementary of the techniacl description of the spanner (according to this probability) in a way that suits to it.
3- All (or some) of the important notes about the technical description of the spanner (according to the first method used for the exploitation of the rotatory sine motion) are also important notes about the technical description of the spanner (according to this probability) in a way that suits to it.
4- These important notes are essential parts of the technical description of the spanner (according to this probability).
5- I consider that the spanner (according to this probability) is one of the important notes about the spanner (according to the first method used for the exploitation of the rotatory sine motion).
II- The second case (according to the figure (8))

10-7) Description of the spanner according to the two probabilities of the second case in the paragraph (A) in that note

The spanner can be applied according to figure (8) by one of two probabilities:
- All things of this case will be exactly similar to the first case (according to the first and third probability),
- But as for the third probability: the external surface of the cylinders ⟨B⟩ will have gearing teeth (in addition to the original gearing teeth on the bases of those cylinders).
- And consequently the aptitude of the rotation and gearing between the cylinders ⟨A⟩ and ⟨B⟩ will be here between the gearing teeth of the cylinder ⟨A⟩ and the gearing teeth of the external surface of the cylinder ⟨B⟩.
no relevant figures. See figures (7), (8), and (38).

10-8) Important notes about the spanner according to these two probabilities

1- The technical description of the spanner (according to the first probability and the third probablility in the first case) is complementary of the technical description of the spanner (according to the first probability and second probability in this case) in a way that suits to it.
2- All (or some) of the important notes about the technical description of the spanner (according to the first method used for the exploitation of the rotatory sine motion) are also important notes about the technical description of the spanner (according to this case) in a way that suits to it.
3- These important notes are essential parts of the technical description of the spanner (according to this case).
4- I consider that the spanner (according to this case) is one of the important notes about the spanner (according to the first method used for the exploitation of the rotatory sine motion).

11- The spanner according to the paragraph (B) in the note (2) in the important notes about the first method used for the exploitation of the rotatory sine motion

The spanner can be applied according to this paragraph by means of several probabilities.

11-1) Description of the spanner according to the first probability in the paragraph (B)

- Here we shall consider that the moved body is one of the two cylinders ⟨A1⟩ or ⟨C1⟩ (and let it be ⟨A1⟩, as it will be hollow and arrenged so that the connection of the thimble can enter that cylinder throuh the two sides in order to do its function needed (i.e.we shall cosider that the cylinder ⟨A1⟩ is the cylinder ⟨A⟩).
- And we shall consider that the two cylinders ⟨B1⟩ and ⟨C1⟩ are ⟨B⟩ and ⟨C⟩ (i.e.transmissions).
  And the possitions of the brake teeth and brake nails of the cylinders ⟨A⟩, ⟨C⟩, and ⟨D⟩ will be suitable so that the spanner will do its function needed (see note (11) in the important notes about the first method used for the exploitation of the rotatory sine motion) (no relevant figure.See figure (9) and (10)).

11-2) Important notes about the spanner according to this probabillity

1- The technical description of the spanner (according to the first method used for the exploitation of the rotatory sine motion), is complemantary of the technical description of the spanner (according to this probability), in a way that suits to it.
2- All (or some) of the important notes about the technical description of the spanner (according to the first method used for the exploitation of the rotatory sine motion, are also important notes about the technical description of the spanner (according to this probability) in a way that suits to it.
3- These important notes are essential parts of the technical description of the spanner (according to this probability).
4- I consider that the spanner (according to this probability) is one of the important notes about the spanner (according to the first method used for the exploitation of the rotatory sine motion).

11-3) Description of the scanner according to the second probability in the paragraph (B)

- Here we shall consider that the moved body is the cylinder ⟨B1⟩, as it will be hollow and arranged so that the connection of the thimble can enter that cylinder in order to do its function needed (i.e. we shall consider that the cylinder ⟨B1⟩ is the cylinder ⟨A⟩).
- And the cylinder ⟨D⟩ will be orbitally hollowed so that the connection of the thimble can enter that cavity and rotate in it round both its rotation axis and the rotation axis of the cylinder ⟨D⟩ at the same time. Figure (39) illustrates this.
- And the possitions of the brake teeth and brake nails of the cylinders ⟨A⟩, ⟨C⟩, and ⟨D⟩ will be suitable so that the spanner will do its function needed (see note (11) in the important notes about the first method used for the exploitation of the rotatory sine motion).

11-4) Important notes about the scanner according to this probability

1- The technical description of the spanner (according to the first method used for the exploitation of the rotatory sine motion) is complementary of the technical description of the spanner (according to this probability) in a way that suits to it.
2- All (or some) of the important notes about the technical description of the spanner (according to the first method used for the exploitation of the rotatory sine motion) are also important notes about the technical description of the spanner (according to this probability) in a way that suits to it.
3- These important notes are essential parts of the technical description of the spanner (according to this probability).
4-I consider that the spanner (according to this probability) is one of the important notes about the spanner (according to the first method used for the exploitation of the rotatory sine motion).

12-1) Description of the spanner according to the second method used for the exploitation of the rotatory sine motion

The spanner can be applied according to this method as follows:

- We shall consider that the moved body is one of the cylinders ⟨A1⟩ or ⟨BC1⟩, as it will be hollow and arranged so that the connection of the thimble can enter that cylinder through the two sides in order to do its function needed.
- And we shall consider that the second cylinder will help the first one in its motion, i.e.it will be (a transmission, and an opposite direction-transmission).
- And the possitions of the brake teeth and brake nails of the cylinders ⟨A⟩, ⟨BC⟩, and ⟨D⟩ will be suitable so that the spanner will do its function needed (see note (11) in the important notes about the first method used for the exploitation of the rotatory sine motion )(no figure see figure (11)).

12-2) Important notes about the spanner according to this method

1- As each one of the two cylinders rotates round its rotation axis in one direction, we can properly transmit the motion of one of them to a different cylinder (in order) to play the role of the moved body.

2- The technical description of the spanner (according to the first method used for the exploitation of the rotatory sine motion), and the technical description of the second method used for the exploitation of the rotatory sine motion, are complementary of the technical description of the spanner (according to this method) in a way that suits to it.

3- All (or some) of the important notes about the technical desription of the spanner (according to the first method used for the exploitation of the rotatory sine motion)are also important notes about the technical description of the spanner (according to this method) in a way that suits to it.

4- These important notes are essential parts of the technical description of the spanner (according to this method).

5- I consider that the spanner (according to this method) is one of the important notes about the spanner (according to the first method used for the exploitation of the rotatory sine motion).

B: As an application of the methods used for the exploitation of the straight sine motion

13-1) Description of the spanner according to the third method used for the exploitation of the straight sine motion

It is the same technical description of the third method used for the exploitation of the straight sine motion.But here the cylinder ⟨A1⟩ will be arranged so that the connection of the thimble can enter it through the two sides in order to do its function (i.e.we shall consider that it is the cylinder ⟨A⟩ of course the nail holders ⟨K⟩ and ⟨L⟩, themeselfes, can be the framwork of the spanner and will play the role of the motive body [or (⟨K⟩, ⟨K1⟩, ⟨K2⟩) and (⟨L⟩, ⟨L1⟩, ⟨L2⟩)] in case it is applied according to note (2) relevant to the same method, as they will be tied to one another in a proper way that they can do there function needed.

As for the cover; (which is ment to do its function as only a cover):

- It can be the solid piece which connects the nail holders through two ends as this piece will be propely tied to those holders (for example by means of screws) that can be removed when we want to remove the cylinder that plays the role of the moved body.
- Of course any nail holder can replace the cover. Figure (40) illustrates this spanner.
* This was the technical description of the spanner according to the third method used for the exploitation of the straight sine motion (in general) therefore I must mention some important notes about it.

13-2) Important notes about the spanner according to this method

1- This spanner can be used as an ordinary ratchet spanner of straight motion. We can do this if we cancel the effect of the brake nails of one side.
  - [We have explained the meaning of the word (an ordinary ratchet spanner of straight motion) in the summery about the subject of the invention].

2- We can use this spanner as an ordinary ratchet spanner of straight motion and as a double ratchet spanner of straight motion at the same time.

We can do this if we use brake nails of external control so that we can cancel the effect of the brake nails of one side when we want that.

3- The technical description of the third method used for the exploitation of the straight sine motion and its important notes are a complementary technical description, and important notes about the technical description of the spanner (according to this method) in a way that suits to it.

4- The technical description of the spanner (according to the first method used for the exploitation of the rotatory sine motion) is complementary of the technical description of the spanner (according to this mehtod). in a way that suits to it.

5- All (or some) of the important notes about the spanner (according to the first method used for the exploitation of the rotatory sine motion) are important notes about the spanner (according to this method), in a way that suits to it.

6- These notes are essential parts of the technical description of the spanner (according to this method).

** These are the important notes about the spanner according to this method .So the description of the spanner according to this method has been finished.

14-1) Description of othe spanner according to the fourth method used for the exploitation of the straight sine motion

- It is the same technical description of the fourth method used for the exploitation of the straight sine motion. But here the cylinder ⟨A1⟩ will be arranged so that the connection of the thimble can enter it through the two sides in order to do its function (i.e. we shall consider that it is the cylinder ⟨A⟩).
- As for fixation of the cylinders ⟨G⟩, it can be done by means of different methods. I shall mention two methods (of course the word fixation of the cylinders ⟨G⟩ means the same thing as in the fixation of the cylinders ⟨B⟩ at the first description of the spanner):
  The first method used for the fixation of the cylinders ⟨G⟩:
  we shall select one of the two bases of the cylinder ⟨A1⟩, and we shall take the two cylinders ⟨G⟩ which are relevant to it, and let them be ⟨GK1⟩ and ⟨GL1⟩.
    Now to fix these two cylinders we need the following:
- Solid ring: - its internal diameter will be arranged so that the connection of the thimble can enter through it and rotate freely.
- and its two diameters which are vertical to each other will be elongated through the four ends.
- we shall put this ring on the base of the cylinder ⟨A⟩, so that its rotation axis will be the same rotation axis of the cylinder ⟨A⟩.
- And we shall fix the two cylinders ⟨GK1⟩ and ⟨GL1⟩ on the two elongations of one of the two diameters [so that each cylinder will be free to rotate round its rotation axis that passes its center and not free to rotate round the rotation axis of the cylinder ⟨A⟩ as it will be prevented by the elongation of the diameter of the ring fixed on it (for example: the cylinder ⟨G⟩ will have a cavity and the elongation of that diameter will enter that cavity so that it will be its rotation axis)].
- On each elongation of the second diameter we shall fix a solid straight piece that will be vertical to that elongation. And at each one of the two ends of that straight piece there will be a wheel in order to absorb motion.
    We can do this if we arrange the length of this straight piece so that each wheel will touch one of the brake nail holders relevant to the two cylinders ⟨GK1⟩ and ⟨GL1⟩ without causing any negative effects on the motion.
    Now:
- When the framework of the spanner is in a straight sine motion, the two cylinders ⟨GK1⟩ and ⟨GL1⟩ will remain stationary (i.e. they will not rotate round the rotation axis of the cylinder ⟨A⟩) as a reasult of the effect of the straight piece and the wheels that absorb motion.
- As for the two cylinders ⟨G⟩ on the second base of the cylinder ⟨A⟩, we shall fix them in the same method we used for the fixation of the previous two cylinders. Figure (41) illustrate that fixation.
  Notes about that fixation:
  1- We can do without one of the halves of the straight piece (as the center of the half is the point in which the elongation of the diameter meets that piece) in a way that causes no negative effects on the aim needed of the method, such as the halves crossed by the sign (X) in figure (41).
  2- It is not necessary that the two diameter of the ring will be vertial to each other, and consequently it is not necessary that the straight piece will be vertical to the elongation of the relevant diameter.
  3- It is not necessary that the straight piece will be a really straight. It can be curved for example) the impotant point is that it must meet the function.

4- As for the ring, it is not necessary to really take the shape of a ring (it can take any other jeometric shape ellipse or carve for example).

5- We can do without one of the two straight pieces, and consequently we can do without the half ring.

6- As for the wheels they are not necessary to be really wheels. They can be anything that meets the function (for example the end of the straight piece can be convex and apt to slide on the nail holder on which it will slide).

another method that can be used for the fixation of the cylinders ⟨G⟩:

It is a simple method in which the nail holder will have a straight channel for the relevant cylinder ⟨G⟩. So we can achieve the requiered fixation (Figure 42) illustrates that spanner and it illustrates one of the probabilities of the second method used for the fixation of the cylinders ⟨G⟩).

\* This was the technical description of the spanner according to this method (in general) so I must mention some important notes.

14-2) Important notes about the spanner according to this method

1- This spanner can be an ordinary ratchet spanner of straight motion through the cancellation of the brake nails of one of the two sides which affect the brake teeth of the lateral surface of the cylinder ⟨A⟩ - (the brake nails of ⟨K⟩ for example) together with the cancellation of the cylinders ⟨G⟩ which affect the second side i.e the cylinders ⟨GL1⟩ and ⟨GL2⟩, and consequently the cancellation of the brake nails ⟨L1⟩ and ⟨L2⟩ which affect those cylinders.

2- This spanner can be used (both as an ordinary ratchet spanner of straight motion) and (as a double ratchet spanner of straight motion) at the same time through using the brake nails of external control so that we can achieve the cancellation mentioned in the previous note when we want that.

3- The cylinders ⟨G⟩ can be fixed through different methods other than those which I mentioned but this does not mean that we invented a different spanner.

4- The technical description of the fourth method used for the exploitation of the straight sine motion and its imporatant notes are a complementary technical description, and important notes about the technical description of the spanner (according to this method) in a way that suits to it.

5- The technical description of the spanner ( according to the third mehtod used for the exploitation of the straight sine motion, and its important notes, are a complementary technical description, and important notes about the technical description of the spanner (according to this method) in a way that suits to it.

6- The technical description of the spanner (according to the first method used for the exploitation of the rotatory sine motion), is complementary of the technical description of the spanner (according to this method), in a way that suits to it.

7- All (or some) of the important notes about the spanner (according to the first method used for the exploitation of the rotatory sine motion) are important notes about the spanner (according to this method), in a way that suits to it.

8- these important notes are essential parts of the technical description of the spanner (according to this method).

\*\* These are the important notes about the spanner (according to this method. So that description of the spanner according to this method has been finished.

15-1) Description of the spanner according to the second method used for the exploitation of the straight sine motion

It is the same technical description of the second method used for the exploitation of the straight sine motion.But here we consider that the moved body is one of the two cylinders (and let it be ⟨A1⟩) and that it will be arranged so that the connection of the thimble can enter it through the two sides in order to do its function needed (i.e.we shall consider that it is the cylinder ⟨A⟩).

\* This is the technical description of the spanner according to this method (in general), Therefore Imust mention some important notes about it (no figure. See figure (11)).

15-2) Important notes about the spanner according to this method

1- We note that the two cylinders ⟨A⟩ and ⟨BC⟩ rotate in two opposite direction. So we can use one cylinder for binding and the other for unbinding as each of them will be arranged so that the connection of the thimble can enter it in order to do its function [so this method is a third method (for changing the spanner) from the position of binding to the possition of unbinding or vice verca] in addition to the method of revarcing the spanner and the method of the brake nails of external control used for that purpose.

2- This spanner can be an ordinary ratchet spanner of straight motion through the cancellation of the brake nails which affect one side of the lateral surface of the cylinder ⟨BC⟩ (during one half period of the motion of the nail holders) and through the cancellation of the brake nails which affect one side of the lateral surface of the cylinder ⟨A⟩ (during the same half period of the motion of the nail holders).

3- This spanner can be used bouth as an ordinary ratchet spanner of straight motion and as a double ratchet spanner of straight motion at the same time through using the brake nails of external control so that we can achieve the cancellation mentioned in the previous note when we want that.

4- The technical description of the second method used for the exploitation of the straight sine motion and its important notes are a complementary technical description, and important notes about the technical description of the spanner (according to this method) in a way that suits to it.

5- The technical description of the spanner (according to the fourth method used for the exploitation of the straight sine motion, and its important notes, are a complementary technical description, and important notes about the technical description of the spanner (according to this method) in a way that suits to it.

6- The technical description of the spanner (according to the first method used for the exploitation of the rotatory sine motion), is a complementary description of the spanner (according to this method) in a way that suits to it.

7- All (or some) of the important notes about the spanner (according to the first method used for the exploitation of the rotatory sine motion) are also important notes about the spanner (according to this method), in a way that suits to it.

8- These important notes are essential parts of the technical description of the spanner (according to this method).

** These are the important notes about the spanner (according to this method. So that description of the spanner according to this method has been finished.

16-1) Description of the spanner according to the first method used for the exploitation of the straight sine motion

It is the technical description of the first method used for the exploitation of the straight sine motion.But here we consider that the moved body is one of the cylinders (and let it be ⟨A1⟩) and that it will be arranged so that the connection of the thimble can enter it through the two sides in order to do its function neede (i.e.we shall consider that it is the cylinder ⟨A⟩).

* This is the technical description of the spanner according to this method (in general). Therefore I must mention some important notes about it (no relevant figures. See figures (1) to (10)).

16-2) Important notes about the spanner according to this method

1-A; We note that the two cylinders ⟨A1⟩ and ⟨B1⟩ rotate in two opposite directions. So we can use one cylinder for binding and the other for unbinding as stated in the note (1) in the important notes about the spanner according to the second method used for the exploitation of the straight sine motion.

B: Also we note that the two cylinders ⟨A1⟩ and ⟨C1⟩ rotate in two opposit direction.But in figure (2), we note that the cylinder ⟨A1⟩ is surrounded by the cylinder ⟨C1⟩. Yet we can use one of these two cylinders for binding and the other for unbinding. We can do this when the cylinder ⟨C1⟩ is arranged so that the connection of a thimble can enter it, But the diameter of the base of the prism inside the cylinder ⟨C1⟩ (i.e.in the place of the connection of a thimble) must be longer than the diameter of the base of the prism inside the cylinder ⟨A1⟩ so that the connection of the thimble relevant to the cylinder ⟨A1⟩ can enter it and do its function without touching the internal surface of the prism inside the cylinder ⟨C1⟩.

- In this case we need two types of the connection of the thimble:
- In the first type, the section which enters the designated place for it of cylinder ⟨A1⟩, must be so that it suits to it and dose its function.
- In the other type, the section which enters the designated place of ⟨C1⟩, must be so that it suits to it and dose its function.

37

- As for the other section of both type, which enters the designated place of the thimble, must be so that it suits to it and dose its function, (so we can use one thimble for both types).

2- Important note (following to paragraph (B) in the previous note):

- The merit of (the cylinder ⟨A1⟩ being surrounded by the cylinder ⟨C1⟩ or the merit of these two cylinders being on one another as in figure (7) for example, and their merit being rotating in two opposite directions) can be used for binding or unbinding the nut of a screw if the screw (because of a certain defect) is free to rotate and we find difficulty in holding it to prevent it from rotation (or in reverse).

  The function of the cylinder ⟨A1⟩ may be to hold the screw and to prevent it from rotating in the direction which prevents the unbinding of the nut and to compel it to rotate in the direction which unbinds it.

- And the function of the cylinder ⟨C1⟩ may be to hold the nut and turn it in the direction of unbinding (or in reverse).

- For this purpose, we shall arrange a connection between the cylinder ⟨A1⟩ and the screw [(as we did in the method of the thimble and the connection of the thimble so that the screw and the cylinder ⟨A1⟩ will be arranged for this) or the connection of the thimble relevant to ⟨A1⟩ will have a sliced head (similar to the head of the screw- driver, and the screw will have a suitable slit(it is preferred that it will have this slit in both its head and bottom) so that the head of that connection will enter one of these two slits.

- Also we shall arrange a suitable connection between the cylinder ⟨C1⟩ and the nut (no figure concerning this note).

Notes about this note (2):

2-a several methods can be used to connect between the relevant cylinders and the screw or nut. But this does not mean an invention of a new method for benfiting that merit.

2-b I mentioned this note (2) to state one of the probabilities to (benfit the merit that the cylinders rotate in different directions) as mentioned in the claims (two) and (five) of the claims.

2-c According to the claim (25). this note is applied to any of the previous mentioned technical descriptions on which it can be applied on.

3- This spanner can be an ordinary ratchet spanner of straight motion through the cancellation of the brake nails which affect one side of the lateral surface (or the base) of the cylinder ⟨C1⟩ (during one half period of the motion of the nail holders) and through the cancellation of the brake nails which affect one side of the lateral surface (or the base) of the cylinder ⟨A1⟩ (during the same half period of the motion of the nail holders).

4- This spanner can be used both (as an ordinary ratchet spanner of straight motion) and as (a double ratchet spanner of straight motion) at the same time through using the brake nails of external control so that we can achieve the cancellation mentioned in the previous note when we want that.

5- The technical description of the first method used for the exploitation of the straight sine motion and its important notes are a complementary technical description, and important notes about the technical description of the spanner (according to this method) in a way that suits to it.

6- The technical description of the spanner (according to the second method used for the exploitation of the straight sine motion), and its important notes, are a complementary technical description, and important notes about the technical description of the spanner (according to this method) in a way that suits to it.

7- The technical description of the spanner (according to the first method used for the exploitation of the rotatory sine motion), is a complementary description of the spanner (according to this method) in a way that suits to it.

8- All (or some) of the important notes about the spanner (according to the first method used for the exploitation of the rotatory sine motion) are also important notes about the spanner (according to this method), in a way that suits to it.

9- These important notes are essential parts of the technical description of the spanner (according to this method).

** These are the important notes about the spanner according to this method.So the description of the spanner according to this method has been finished.

## Claims

1. The property of the ideas of the methods (first, second, third, and fourth). used for the exploitation of the rotatory sine motion, as stated in their technical descriptions together with taking into consideration that the important notes about any of those methods are essential parts of its technical description.

2.  The property of the claim (1) in case of using any of those methods to exploit one of the two half periods of the rotatory sine motion or in case of using it to benefit the merit that the cylinders rotate in different directions.

3.  The property of the right to apply, invest, and exploit those ideas (mentioned in claims (1) and (2)) in any trading, manufacturing and mechanical field.

4.  The property of the ideas of the methods (first, second, third and fourth) used for the exploitation of the straight sine motion, as stated in their technical descriptions together with taking into consideration that the important notes about any of those methods are essential parts of its technical description.

5.  The property of the claim (4) in case of using any of those methodes (mentioned in the claim (4)) to exploit one of the two half periods of the straight sine motion or in case of using it to benefit the merit that the cylinders rotate in different directions.

6.  The property of the right to apply, invist, and exploit those ideas (mentioned in the claims (4) and (5)) in any trading, manufacturing and mechanical field.

7.  The property of the ideas of the spanner (according to all methods, cases, and probabilites) mentioned in the technical descriptions relevant to the applied example when it is an application of the methods used for exploitation of the rotatory sine motion and when it is an application of the methods used for the exploitation of the straight sine motion. As they are stated in those descriptions together with taking into consideration that all important notes about the spanner (according to a certain method, case, or propability) are essential parts of its technical descsrection (according to that method, case, or propability).

8.  The property of the right to manufacture, invest, and exploit that spanner (mentioned in the claim (7)) when it is described (according to the first method used for the exploitation of the rotary sine motion). As stated in that descreiption, taking into considratiion that the important notes about it are essential parts of that descreption, and when any of the following methods is applied to it:
    A- The first method used for the fixation of the cylenders ⟨B⟩
    B- The second method used for the fixation of the cylenders ⟨B⟩
    C- The third method used for the fixation of the cylenders ⟨B⟩
    D- The fourth method used for the fixation of the cylenders ⟨B⟩
    E- The fifth method used for the fixation of the cylenders ⟨B⟩

9.  The property of the right to manufacture, invest, and exploit that spanner (mentioned in the claim (7)) when it is described (according to the first probability in the first case of the spanner according to the paragraph (A) in the note (2) of the important notes about the first method used for the exploitation of the rotatory sine motion), as stated in that description, taking into consideration that the important notes about it are essential parts of that description.

10. The property of the right to manufacture, invest, and exploit that spanner (mentioned in the claim (7)) when it is described (according to the second probability in the first case of the spanner according to the paragraph (A) in the note (2) of the important notes about the first method used for the exploitation of the rotatory sine motion), as stated in that description, taking into consideration that the important notes about it are essential parts of that description.

11. The property of the right to manufacture, invest, and exploit that spanner (mentioned in the claim (7)) when it is described (according to the third probability in the first case of the spanner according to the paragraph (A) in the note (2) of the important notes about the first method used for the exploitation of the rotatory sine motion). as stated in that description, taking into consideration that the important notes about it are essential parts of that description.

12. The property of the right to manufacture, invest, and exploit that spanner (mentioned in the claim (7)), when it is described (according to the first probability in the second case of the spanner according to the paragraph (A) in the note (2) of the important notes about the first method used for the exploitation of the rotatory sine motion), as stated in that description, taking into consideration that the important notes about it are essential parts of that description.

13. The property of the right to manufacture, invest, and exploit that spanner (mentioned in the claim (7)) when it is described (according to the second probability in the second case of the spanner according to the paragraph (A) in the note (2) of the important notes about the first method used for the exploitation of the rotatory sine motion) as stated in that description, taking into consideration that the important notes about it are essential parts of that description.

14. The property of the right to manufacture, invest, and expliot that spanner (mentioned in the claim (7)) when it is described (according to the first probability of the spanner according to the paragraph (B) in the note (2) of the important notes about the first method used for the exploitation of the rotatory sine motion) as stated in that description, taking into consideration that the important notes about it are essential parts of that description.

15. The property of the right to manufacture, invest, and exploit that spanner (mentioned in the claim (7)) when it is described (according to the second probability of the spanner according to the paragraph (B) in the note (2) of the important notes about the first method used for the exploitation of the rotatory sine motion), as stated in that description, taking into consideration that the important notes about it are essential parts of that description.

16. The property of the right to manufacture, invest, and exploit that spanner (mentioned in the claim (7)) when it is described (according to the second method used for the exploitation of the rotatory sine motion), as stated in that description, taking into consideration that the important notes about it are essential parts of that description.

17. The property of the right to manufacture, invest, and exploit that spanner (mentioned in the claim (7)) when it is described (according to the third method used for the exploitation of the straight sine motion), as stated in that description, taking into consideration that the important notes about it are essential parts of that description.

18. The property of the right to manufacture, invest, and exploit that spanner (mentioned in the claim (7)) when it is described (according to the fourth method used for the exploitation of the straight sine motion), as stated in that description, taking into consideration that the important notes about it are essential parts of that description.

19. The property of the right to manufacture, invest, and exploit that spanner (mentioned in the claim (7)) when it is described (according to the second method used for the exploitation of the straight sine motion), as stated in that description, taking into consideration that the important notes about it are essential part of that description.

20. The property of the right to manufacture, invest and exploit that spanner (mentioned in the claim (7)) when it is described (according to the first method used for the exploitation of the straight sine motion), as stated in that description, taking into consideration that the important notes about it are essential parts of that description.

21. The property of the right to manufacture, and invest that spanner (mentioned in the claims (7) to (20)), when any of old or new techniques is added to it, For example: the addition of the merit of the cycle meter, pressure meter... etc.

22. The property of the ideas of the methods (first, second, third, fourth and fifth) used for the fixation of the cylinders ⟨B⟩ mentioned in the technical description of the spanner (according to the first method used for the rotatory sine motion).

23. The property of the right to apply, and invest any of the methods used for the fixation of the cylinders ⟨B⟩ (mentioned in the claim (22)) in any manufacturing and mechanical field (that is similar to the field of their usage in the spanner).

**24.** I consider that the technical descriptions and the important notes of the spanner (according to all methodes, cases and probabilities) are technical descriptions and important notes concerning another applied example, which is the (screw-driver) in a way that suits to it as being a screw-driver.

So I demand the property of the claims from (7) to (20) in case of changing the word spanner into the word screw-driver.

**25.** The property of my right to consider that all of the technical descriptions mentioned concerning [the methods of the invention, the methods of the spanner, the methods of the screw-driver, and the methods used for the fixation of the cylinders ⟨B⟩] are complementary of one another.

The same is right for the important notes about each description.

For example:-

As for the fixation of the cylinders ⟨B⟩, we note that the note (1) in the important notes about the first method used for the exploitation of the rotatory sine motion can be applied to those methodes.

Fig (i)

Fig (2)

54

18

59

58

14

59

15

3

Section 1 of
R - Fig(2)

16

Section 2 of
R-Fig(2)

Fig(3)

Fig(4)

Fig(5)

Fig(6)

Fig (7)

Fig (8)

R − Fig (7)

Fig (9)

Fig (10)

Fig (11)

Fig(12)

Fig (13)

Fig (14)

Fig (15)

Fig (16)

Fig (17)

Fig (18)

Fig (19)

Fig (20)

Fig (21)

Fig(22)

Fig(23)

Fig(24)

Fig(25)

Fig(26)

Fig(27)

Fig (28)

Fig (29)

fig (30)

fig (31)

Fig (32)

EP 0 667 469 A1

Fig(33)

61

Fig (34)

Fig (35)

Fig (36)

6

15

Fig (37)

20

35

26

25

27

23

15

28

14

8

6

6

5

22

36

17

16

Fig (38)

Fig (39)

Fig (40)

Fig (41)

Fig (x2)

European Patent

Office

**PARTIAL EUROPEAN SEARCH REPORT** Application Number

which under Rule 45 of the European Patent Convention EP 94 40 0323
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 454 852 (TOKUDEN KOSUMO KABUSHIKI) --- | | F16H31/00 B25B13/46 |
| A | EP-A-0 017 047 (M.RAUTIO ET AL.) --- | | |
| A | DE-A-38 15 106 (K.KÜHNEL) --- | | |
| A | FR-A-2 393 988 (MANURHIN-AUTOMATIC S.A.) --- | | |
| A | US-A-5 009 132 (D.G.GILBERTO) ----- | | |

TECHNICAL FIELDS
SEARCHED (Int.Cl.6)

F16H
B25B

## INCOMPLETE SEARCH

The Search Division considers that the present European patent application does not comply with
the provisions of the European Patent Convention to such an extent that it is not possible to carry
out a meaningful search into the state of the art on the basis of some of the claims
Claims searched completely :
Claims searched incompletely :
Claims not searched :
Reason for the limitation of the search:

see sheet C

| Place of search | Date of completion of the search | Examiner |
|---|---|---|
| THE HAGUE | 14 July 1994 | Majerus, H |

EPO FORM 1503 03.82 (P04C07)

EP 94 40 0323

-C-

MEANINGFUL SEARCH NOT POSSIBLE ON THE BASIS OF ALL CLAIMS

Reason : A meaningful search of the claims was not possible, because the claims are obscure and do not describe searchable technical features (Art. 84 and Rule 29 (6) EPC). The documents cited in the report are only ment as examples showing that ratchet mechanisms exploiting both strokes of a ratchet motion are per se known.